# EUROPEAN PATENT APPLICATION

(11) **EP 4 492 809 A1**
(43) Date of publication of application: **15.01.2025**
(21) Application number: 24727627.2
(22) Date of filing: 30.05.2024
(51) Int. Cl.: H04N 23/68, H04N 23/54, H04N 23/55, H04N 23/51, H04N 23/67, H04N 23/57, G03B 5/04, G03B 3/10, G03B 13/36, G03B 17/12

(54) **CAMERA MODULE AND ELECTRONIC DEVICE COMPRISING SAME**

(30) Priority: 30.05.2023 KR 20230069268; 08.09.2023 KR 20230119770
(71) Applicant: Samsung Electronics Co., Ltd, Suwon-si, Gyeonggi-do 16677 (KR)
(72) Inventor: BYON, Kwangseok, Yeongtong-gu,Suwon-si Gyeonggi-do 16677 (KR); KIM, Bongchan, Yeongtong-gu,Suwon-si Gyeonggi-do 16677 (KR); SHIM, Jaekyu, Yeongtong-gu,Suwon-si Gyeonggi-do 16677 (KR)
(74) Representative: HGF
(86) International application number: PCT/KR2024/007374
(87) International publication number: WO 2024/248494

(57) **Abstract**

Various embodiments of the disclosure relate to a camera module and an electronic device including the same. According to an embodiment, there may be provided an electronic device including a camera module, comprising a camera housing; a lens assembly including at least one lens aligned along an optical axis; a first substrate including one surface where an image sensor is disposed; a carrier member configured to guide the first substrate where the image sensor is disposed or to guide the lens assembly in a direction parallel to the optical axis or a direction perpendicular to the optical axis; at least one driving member including at least one coil and at least one magnet disposed to at least partially face the at least one coil and configured to move the carrier member in the direction parallel to the optical axis and the direction perpendicular to the optical axis; and a first stopper protruding from the camera housing in a direction parallel to the optical axis and configured to restrict a movement, in the direction perpendicular to the optical axis, of the carrier member or the first substrate where the image sensor is disposed. Other various embodiments may also be applicable.

## Description

### [Technical Field]

Various embodiments of the disclosure relate to a camera module and an electronic device including the same.

### [Background Art]

With the development of digital camera manufacturing technology, an electronic device equipped with a compact and lightweight camera module has been used. Users may take advantage of various functionalities of an electronic device with camera modules, such as photographing, video recording, video call, augmented reality (AR), etc., in a convenient manner, while carrying it all the time. Typically, a camera module may include a lens assembly and an image sensor.

The camera module may perform an image stabilization function for image correction in response to disturbance. Here, the disturbance may be the occurrence of various artifacts, such as blurring of the image obtained through the camera module due to slight shaking of the user's hand when taking a photo or video. The image stabilization function, e.g., a shake (or hand shake) correction function, may move the lens assembly or image sensor included in the camera module on a plane substantially perpendicular to the optical axis to compensate for limited movement of the electronic device due to motion of the user's grip or a fixing device (e.g., the fixing device being any device or object used to fix the electronic device relative to an object or objects which are to be photographed), thereby preventing or alleviating shakes in the captured image or video. To that end, the camera module may include at least one coil and magnet. The coil to which current is applied may generate electromagnetic force through electromagnetic interaction with the magnet, and the camera module may perform a shake correction function using the generated electromagnetic force. As a method for correcting shakes by electromagnetic force, various methods, such as a lens shift that moves the lens assembly, an image sensor shift that moves the image sensor, a prism shift that moves the prism, and a module tilt that tilts the camera module, may apply.

The above-described information may be provided as background for the purpose of helping understanding of the disclosure. No claim or determination is made as to whether any of the foregoing is applicable as background art in relation to the disclosure.

### [Technical Problem]

In an electronic device which comprises a camera module capable of providing a lens shift, an image sensor shift, a prism shift, a module tilt or the like, at least at first part of the camera module is capable of moving with respect to at least a second part of the camera module. In the event that the camera module undergoes a sudden acceleration, for example because it is dropped and collides with a surface, the first and second parts of the camera module may move with respect to one another, and even collide with one another. In such an instance, damage may be caused to the camera module or other components of the electronic device. It is desirable to reduce any such damage.

In addition, the motion of the first part of the camera module with respect to the second part of the camera module may produce sounds which are audible to the user. Such sound can be both distressing and distracting to the user, and it is desirable to reduce any such sound.

### [Disclosure of Invention]

### [Solution to Problems]

According to an embodiment of the disclosure, there may be provided an electronic device including a camera module, comprising a camera housing; a lens assembly including at least one lens aligned along an optical axis; a first substrate including one surface where an image sensor is disposed; a carrier member configured to guide the first substrate where the image sensor is disposed or to guide the lens assembly in a direction parallel to the optical axis or a direction perpendicular to the optical axis; at least one driving member including at least one coil and at least one magnet disposed to at least partially face the at least one coil and configured to move the carrier member in the direction parallel to the optical axis and the direction perpendicular to the optical axis; and a first stopper protruding from the camera housing in a direction parallel to the optical axis and configured to restrict a movement, in the direction perpendicular to the optical axis, of the carrier member or the first substrate where the image sensor is disposed.

According to an embodiment of the disclosure, there may be provided an electronic device including a camera module, comprising a camera housing; a lens assembly including at least one lens aligned along an optical axis and a lens barrel surrounding the at least one lens; a first substrate including a surface where an image sensor is disposed; a first carrier configured to move the first substrate where the image sensor is disposed or configured to move the lens assembly, in a first direction parallel to the optical axis; a second carrier configured to move the first substrate where the image sensor is disposed or to move the lens assembly in a second direction perpendicular to the optical axis or in a third direction perpendicular to the first direction and the second direction; at least one driving member including at least one coil and at least one magnet disposed to at least partially face the at least one coil and configured to move the first carrier in the first direction or to move the second carrier in the second direction or the third direction; and a first stopper protruding from the camera housing in a direction parallel to the optical axis and configured to restrict a movement of the second carrier. The first stopper may be formed in four portions symmetrical with respect to one point on the optical axis based on a direction in which the second carrier is driven.

According to an embodiment of the disclosure, there may be provided a camera module, comprising a camera housing; a lens assembly including at least one lens aligned along an optical axis; a first substrate including a surface where an image sensor is disposed; an AF carrier configured to guide the first substrate where the image sensor is disposed or to guide the lens assembly in a direction of the optical axis; and an OIS carrier configured to guide the first substrate where the image sensor is disposed or to guide the lens assembly in a direction perpendicular to the optical axis. The AF carrier may contact the OIS carrier by a plurality of ball guides positioned between the AF carrier and the OIS carrier. The AF carrier may contact the camera housing by a plurality of ball guides positioned between the AF carrier and the camera housing. A first stopper may be protruding from the camera housing toward a space between the AF carrier and the OIS carrier, the first stopper at least partially facing the OIS carrier or the lens assembly.

### [Brief Description of Drawings]

The foregoing and other aspects, configurations, and/or advantages of various embodiments of the disclosure will be more apparent from the following detailed description taken in conjunction with the accompanying drawings.
FIG. 1 is a block diagram illustrating an electronic device in a network environment according to an embodiment;
FIG. 2 is a front perspective view illustrating an electronic device according to an embodiment;
FIG. 3 is a rear perspective view illustrating an electronic device according to an embodiment;
FIG. 4 is an exploded perspective view illustrating a camera module according to an embodiment;
FIG. 5 is a view schematically illustrating a cross section of a camera module in a state in which components of the camera module are assembled according to an embodiment;
FIG. 6 is a view schematically illustrating a cross section of a camera module in a state in which components of the camera module are assembled according to an embodiment;
FIG. 7 is a perspective view illustrating a camera module according to an embodiment;
FIG. 8 is an enlarged view illustrating a first stopper according to an embodiment;
FIG. 9 is a cross-sectional view illustrating a portion of a camera module according to an embodiment;
FIG. 10 is a front view illustrating a portion of a camera module according to an embodiment;
FIG. 11 is a perspective view illustrating a camera module according to an embodiment;
FIG. 12 is an enlarged view illustrating a first stopper according to an embodiment;
FIG. 13 is an enlarged view illustrating a first stopper and a second stopper according to an embodiment;
FIG. 14 is a cross-sectional view illustrating a portion of a camera module including a first stopper and a second stopper according to an embodiment;
FIG. 15 is an enlarged view illustrating a first stopper and a second stopper according to an embodiment;
FIG. 16 is a cross-sectional view illustrating a portion of a camera module including a first stopper and a second stopper according to an embodiment;
FIG. 17 is a perspective view illustrating a camera module according to an embodiment;
FIG. 18 is a cross-sectional view illustrating a portion of a camera module according to an embodiment;
FIG. 19 is a cross-sectional perspective view illustrating a camera module according to an embodiment;
FIG. 20 is a perspective view illustrating a camera module according to an embodiment;
FIG. 21 is a front view illustrating a camera module in which an inside thereof is shown according to an embodiment;
FIG. 22 is a rear view illustrating a camera module in which an inside thereof is shown according to an embodiment;
FIG. 23 is a cross-sectional view illustrating a camera module according to an embodiment;
FIG. 24 is a cross-sectional view illustrating a camera module according to an embodiment;
FIG. 25 is a perspective view illustrating a camera module according to an embodiment;
FIG. 26 is a front view illustrating a camera module in which an inside thereof is shown according to an embodiment;
FIG. 27 is a rear view illustrating a camera module in which an inside thereof is shown according to an embodiment;
FIG. 28 is a rear view illustrating an image sensor assembly and a first stopper according to an embodiment;
FIG. 29 is a cross-sectional view illustrating a camera module according to an embodiment; and
FIG. 30 is a cross-sectional view illustrating a camera module according to an embodiment.

Throughout the drawings, like reference numerals may be assigned to like parts, components, and/or structures.

### [Mode for the Invention]

A camera module may include a component that reciprocates, travels or has a range of movement in at least two directions substantially perpendicular to the optical axis direction when performing an optical image stabilization (OIS) function and a component that reciprocates, travels or has a range of movement in the optical axis direction when performing an auto focus (AF) first and may move in three axis directions (e.g., X, Y, and Z directions). To enable such movement, the camera module may include a plurality of carriers and, e.g., a driver employing a ball bearing method including a guide ball. According to an embodiment, the camera module may include a stopper for restricting movement to allow a component on one side of one among the plurality of carriers to drive only by a target correction amount (movement amount). Meanwhile, if a strong impact is applied when no power is applied to the camera (hereinafter, referred to as "when not powered"), e.g., if the user drops the phone or if a large impact or repeated shock is applied, for example when riding a bicycle or a motorcycle, the stopper provided on one side of one of the plurality of carriers may collide with another carrier. This may also occur when power is applied to the camera. In this case, the structure of the driver including the guide ball may be damaged, and continuous such damage may affect implementation of a first of the camera module, such as focusing. Hereinafter, in various embodiments of the disclosure, there is disclosed a camera module structure capable of preventing and/or reducing influence by impact although subjected to strong impact or continuous shock, particularly when the camera module is not powered.

Objects of the disclosure are not limited to the foregoing, and other unmentioned objects would be apparent to one of ordinary skill in the art from the following description.

The following description taken in conjunction with the accompanying drawings may be presented to provide a comprehensive understanding of various implementations of the disclosure as defined by the claims and equivalents thereto. The specific embodiments disclosed in the following description entail various specific details to aid understanding, but are regarded as one of various embodiments. Accordingly, it will be apparent to those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe the various embodiments of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

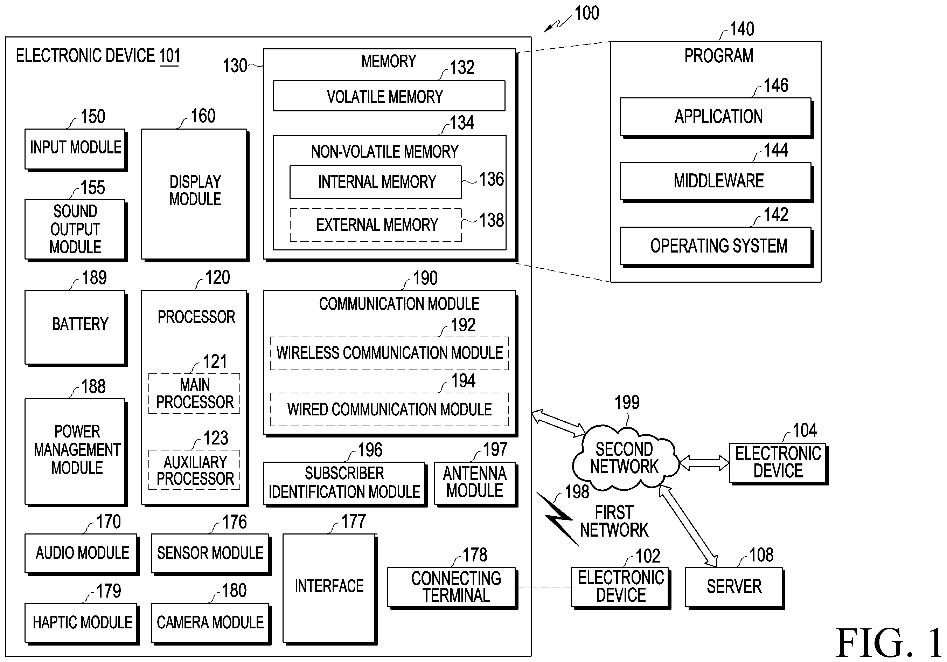

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

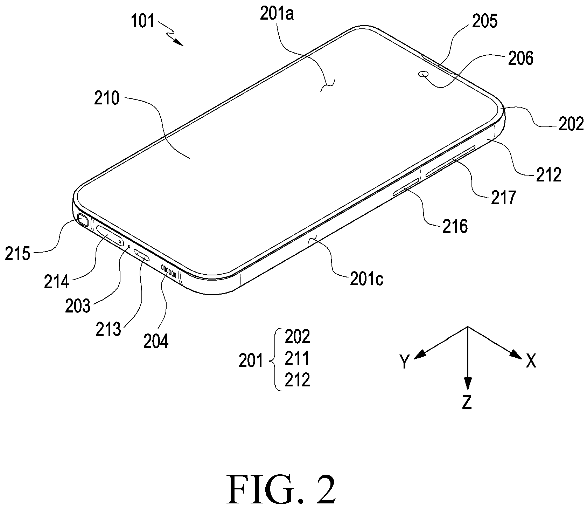

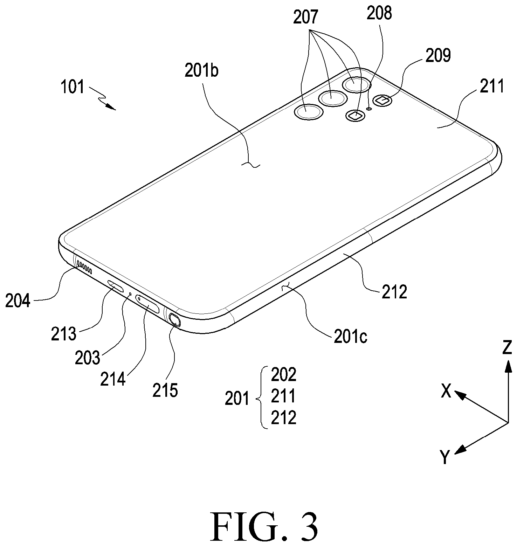

FIG. 2 is a perspective view illustrating an electronic device 101 according to an embodiment. FIG. 3 is a rear perspective view illustrating an electronic device 101 according to an embodiment.

**In** the following detailed description, the length direction of the electronic device 101 may be defined as the 'Y-axis direction', the width direction as the 'X-axis direction', and/or the height direction (the thickness direction) as the 'Z-axis direction'. In the following detailed description, the mentioned length direction, width direction, and/or height direction (or thickness direction) may indicate the length direction, the width direction, and/or the height direction (or thickness direction) of the electronic device. In an embodiment, 'negative/positive (-/+)' may be mentioned together with the Cartesian coordinate system exemplified in the drawings with respect to the direction in which the component is oriented. For example, referring to FIG. 2, the front surface of the electronic device 101 or housing 201 may be defined as a 'surface facing in the -Z direction,' and the rear surface may be defined as a 'surface facing in the +Z direction'. According to an embodiment, the arrangement relationship in the height direction of a component or another component, that is, the reference as to whether a component is on/under another component, may follow the +Z-axis direction/-Z-axis direction. In other words, when a component is disposed on another component, it may mean that the component is disposed on the +Z-axis direction with respect to the other component, and when a component is disposed under another component, it may mean that the component is disposed on the -Z-axis direction with respect to the other component. Meanwhile, it should be noted that although a component is disposed on or under another component, it does not necessarily mean that the entire component is disposed on or under the entire other component. For example, it should be noted that a portion of the component may be disposed on a portion of the other component while another portion of the component may be disposed under another portion of the other component. According to an embodiment, when a component is viewed from thereabove, it may mean that the component is viewed in the -Z-axis direction from a place a predetermined distance away from the component. According to an embodiment, when a component faces in a certain direction, it may be understood as including when the component faces in a direction parallel to the certain direction as well as when the component faces in the same direction as the certain direction. In the following description, it should be noted that when a component overlaps (or is stacked on) another component, the above description of the arrangement relationship in height direction may apply. In describing the direction, when 'negative/positive (-/+)' is not described, it may be interpreted as including both the + direction and the - direction unless separately defined. For example, the 'Z-axis direction' may be interpreted as including both the +Z direction and the -Z direction. Likewise, 'X-axis direction' may be interpreted as including both +X direction and - X direction, and 'Y-axis direction' may be interpreted as including both +Y direction and -Y direction. In describing directions, facing in any one axis among the three axes of the orthogonal coordinate system may include facing in a direction parallel to the axis. Hereinafter, in the following description, 'first direction' may mean the Z-axis direction or a direction parallel to the Z axis, and 'second direction' may mean the X-axis direction or a direction parallel to the X axis. Further, 'third direction' may mean the Y-axis direction or a direction parallel to the Y axis. It should be noted that the directions are so defined with respect to the Cartesian coordinate system shown in the drawings for the sake of brevity of description, and the description of these directions or components do not limit various embodiments of the disclosure.

Referring to FIGS. 2 and 3, an electronic device 101 according to an embodiment may include a housing 201 with a front surface 201a, a rear surface 201b, and a side surface 201c surrounding a space between the front surface 201a and the rear surface 201b. In an embodiment (not shown), the housing 201 may denote a structure forming part of the front surface 201a, the rear surface 201b, and the side surfaces 201c of FIG. 2. According to an embodiment, at least part of the front surface 201a may have a substantially transparent front plate 202 (e.g., a glass plate or polymer plate including various coat layers). The rear surface 201b may be formed by a rear plate 211. The rear plate 211 may be formed of, e.g., glass, ceramic, polymer, metal (e.g., aluminum, stainless steel (STS), or magnesium), or a combination of at least two thereof. The side surface 201c may be formed by a side bezel structure (or a "side member") 212 that couples to the front plate 202 and the rear plate 211 and includes a metal and/or polymer. In an embodiment, the front plate 202 and side bezel structure 212 may be formed as one body and may include the same material. Or, the rear plate 211 and the side bezel plate 212 may be integrally formed together and include the same material (e.g., glass, metal, such as aluminum, or ceramic). According to an embodiment, the front surface 201a and/or the front plate 202 may be interpreted as a part of the display 210. According to an embodiment, the housing 201 may include a front plate 202 and a rear plate 211.

According to an embodiment, the electronic device 101 may include at least one of a display 210, audio modules 203, 204, and 205 (e.g., the audio module 170 of FIG. 1), a sensor module (e.g., the sensor module of FIG. 1) 176), camera modules 206 and 207 (e.g., the camera module 180 of FIG. 1), a key input device 216 or 217 (e.g., the input module 150 of FIG. 1), and connector holes 213 and 214 (e.g., the connection terminal 178 of FIG. 1). According to an embodiment, the electronic device 101 may exclude at least one (e.g., the connector hole 214) of the components or may add other components.

According to an embodiment, the display 210 may be visually revealed through, e.g., a majority portion of the front plate 202. In an embodiment, at least a portion of the display 210 may be exposed through the front plate 202 forming the front surface 202a. According to an embodiment, the display 210 may be a flexible display or a foldable display.

According to an embodiment, the surface (or the front plate 202) of the housing 201 may include a screen display area formed as the display 210 is visually exposed. For example, the screen display area may include the front surface 201a.

In an embodiment (not shown), the electronic device 101 may include a recess or opening formed in a portion of the screen display area (e.g., the front surface 201a) of the display 210 and may include at least one or more of an audio module 205, a sensor module (not shown), a light emitting device (not shown), and a camera module 206 aligned with the recess or opening. In an embodiment (not shown), at least one or more of the audio module 205, sensor module (not shown), camera module 206, fingerprint sensor (not shown), and light emitting device (not shown) may be included on the rear surface of the screen display area of the display 210.

In an embodiment (not shown), the display 210 may be disposed to be coupled with, or adjacent, a touch detecting circuit, a pressure sensor capable of measuring the strength (pressure) of touches, and/or a digitizer for detecting a magnetic field-type stylus pen 215.

In some embodiments, at least a portion of the key input device 216 or 217 may be disposed on the side bezel structure 212.

According to an embodiment, the audio modules 203, 204, and 205 may include, e.g., a microphone hole 203 and speaker holes 204 and 205. A microphone for acquiring external sounds may be disposed in the microphone hole 203. **In** some embodiments, a plurality of microphones may be disposed to detect the direction of the sound. The speaker holes 204 and 205 may include an external speaker hole 204 and a phone receiver hole 205. In an embodiment, the speaker holes 204 and 205 and the microphone hole 203 may be implemented as a single hole, or speakers may be included without the speaker holes 204 and 205 (e.g., piezo speakers). The audio modules 203, 204, and 205 are not limited to the above-described structure. Depending on the structure of the electronic device 101, various design changes may be made-e.g., only some of the audio modules may be mounted, or a new audio module may be added.

According to an embodiment, the sensor modules (not shown) may generate an electrical signal or data value corresponding to an internal operating state or external environmental state of the electronic device 101. The sensor modules (not shown) may include a first sensor module (not shown) (e.g., a proximity sensor) and/or a second sensor module (not shown) (e.g., a fingerprint sensor) disposed on the front surface 201a of the housing 201 and/or a third sensor module (not shown) (e.g., a heart rate monitor (HRM) sensor) and/or a fourth sensor module (not shown) (e.g., a fingerprint sensor) disposed on the rear surface 201b of the housing 201. In an embodiment (not shown), the fingerprint sensor may be disposed on the rear surface 201b as well as on the front surface 201a (e.g., the display 210) of the housing 201. The electronic device 101 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not shown). The sensor module (not shown) is not limited to the above-described structure. Depending on the structure of the electronic device 101, various design changes may be made--e.g., only some of the sensor modules may be mounted, or a new sensor module may be added.

According to an embodiment, the camera modules 206 and 207 may include a front camera module 206 disposed on the first surface 201a of the electronic device 101 and a rear camera module 207, a flash 208, and/or an IR sensor 209 disposed on the rear surface 201b. The camera modules 206 and 207 may include one or more lenses, an image sensor, and/or an image signal processor. The flash 208 may include, e.g., a light emitting diode (LED) or a xenon lamp. The camera modules 206 and 207 are not limited to the above-described structure. Depending on the structure of the electronic device 101, various design changes may be made--e.g., only some of the camera modules may be mounted, or a new camera module may be added.

According to an embodiment, the electronic device 101 may include a plurality of camera modules (e.g., a dual camera or triple camera) having different attributes (e.g., angle of view) or functions. For example, the rear camera module 207 may include a plurality of camera modules including lenses with different fields of view. For example, the plurality of camera modules may include at least one of a wide-angle camera, an ultra wide-angle camera, a telephoto camera, and an infrared (IR) camera (e.g., a time of flight (TOF) camera, a structured light camera). Further, for example, the plurality of camera modules may include optical zoom cameras with adjustable magnification. According to an embodiment, the electronic device 101 may be configured to operate a designated camera module or another camera module, based on the user's selection, or under a predetermined environment, for the plurality of camera modules. According to an embodiment, the IR camera may be operated as at least a portion of the sensor module. For example, the TOF camera may be operated as at least a portion of a sensor module (not shown) for detecting the distance to the subject.

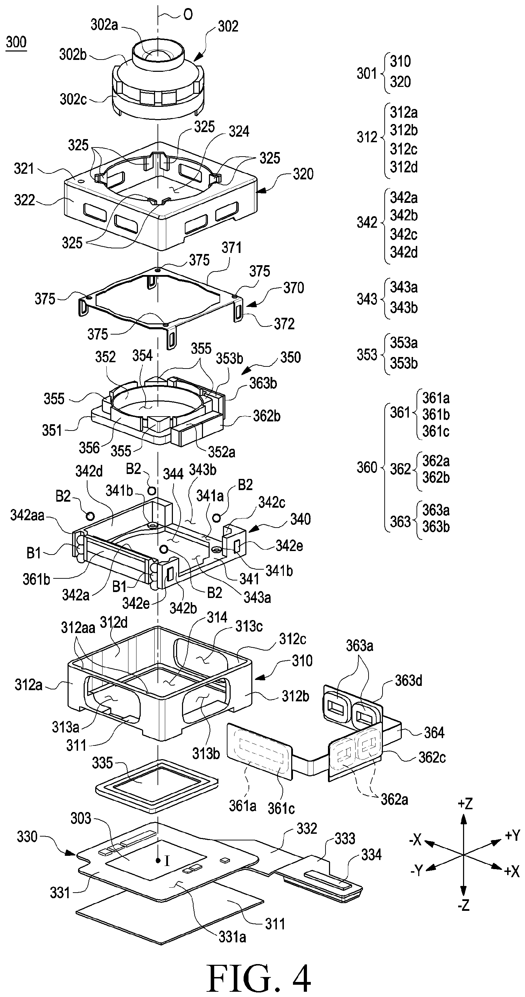

According to an embodiment, the camera modules 206 and 207 may include a vertical camera module and/or a folded camera module. The vertical camera module is a module that includes a camera formed on a straight line without bending the path along which light incident on the lens assembly reaches the image sensor and, during an auto focus (AF) operation or optical image stabilization (OIS) operation, relative motions between the lens barrel (e.g., the lens barrel 302b of FIG. 4) and the camera housing (e.g., the camera housing 301 of FIG. 4) surrounding the lens barrel (or relative motions between the image sensor (e.g., the image sensor 303 of FIG. 4) and the camera housing) may be performed. The folded camera module may mean a camera module in which when the light incident on the lens assembly reaches the image sensor, the path is bent at least once and may typically include a member (e.g., a prism or a mirror) to reflect or refract light at least once. Here, whether the path in which light reaches the image sensor is bent may be not based on bending the light by each lens included in the lens assembly but based on bending the light by the member (e.g., a prism or a mirror). According to an embodiment, a portion (e.g., front camera) of the camera modules 206 and 207 may include a vertical camera module, and another portion (e.g., rear camera) may include a folded camera module.

Further, according to an embodiment, a portion (e.g., front camera module 206) of the camera modules 206 and 207 may be implemented as an under display camera (UDC).

According to an embodiment, the key input device 216 or 217 may be disposed on the side surface 201c of the housing 201. In an embodiment, the electronic device 101 may exclude all or some of the above-mentioned key input devices 216 and 217 and the excluded key input devices 216 and 217 may be implemented in other forms, e.g., as soft keys, on the display 210. In an embodiment, the key input device 216 or 217 may include a sensor module (not shown) disposed on the rear surface 201b of the housing 201.

According to an embodiment, a light emitting device (not shown) may be disposed on, e.g., the front surface 201a of the housing 201. The light emitting device (not shown) may provide, e.g., information about the state of the electronic device 101 in the form of light. In an embodiment, the light emitting device (not shown) may provide a light source that interacts with, e.g., the front camera module 206. The light emitting device (not shown) may include, e.g., a light emitting diode (LED), an infrared (IR) LED, and/or a xenon lamp.

According to an embodiment, the connector holes 213 and 214 may include a first connector hole 213 for receiving a connector (e.g., an earphone jack) for transmitting/receiving audio signals to/from an external electronic device or a connector (e.g., a USB connector) for transmitting/receiving power and/or data to/from the external electronic device and/or a second connector hole 214 for receiving a storage device (e.g., a subscriber identification module (SIM) card, a secure digital (SD) memory card). According to an embodiment, the first connector hole 213 and/or the second connector hole 214 may be omitted. The connector holes 213 and 214 are not limited to the above-described structure. Depending on the structure of the electronic device 101, various design changes may be made, such as mounting only some of the connector holes or adding a new connector hole.

The pen input device 215 (e.g., a stylus pen) may be guided and detachably inserted through a hole formed in a side surface of the housing 201 into the inside of the housing 201. The pen input device 120 may include a button for easy detachment. A separate resonant circuit may be embedded in the pen input device 215 and may interwork with an electromagnetic induction panel (e.g., a digitizer) included in the electronic device 101. The pen input device 215 may come in, e.g., an electro-magnetic resonance (EMR), active electrical stylus (AES), or electric coupled resonance (ECR) scheme.

The electronic device 101 disclosed in FIGS. 2 and 3 has a bar-type or plate-type appearance but the disclosure is not limited thereto. For example, the illustrated electronic device may be part of a rollable electronic device or a foldable electronic device. "Rollable electronic device" may mean an electronic device at least a portion of which may be wound or rolled or received in the housing 201 as the display 210 may be bent and deformed. As the display is stretched out or is exposed to the outside in a larger area according to the user's need, the rollable electronic device may use an expanded second display area. "Foldable electronic device" may mean an electronic device that may be folded in directions to face two different areas of the display or in directions opposite to each other. **In** general, in the portable state, the foldable electronic device may be folded so that the two different areas of the display face each other and, in an actual use state, the user may unfold the display so that the two different areas form a substantially flat shape. In some embodiments, the electronic device 101 according to various embodiments of the disclosure may be interpreted as including various electronic devices, such as a laptop computer or a home appliance, as well as a portable electronic device, such as a smart phone.

The electronic device 101 of the disclosure may include camera modules 300, 400, and 500, which are described below.

FIG. 4 is an exploded perspective view illustrating a camera module according to an embodiment.

Hereinafter, in a detailed description of the camera module 300 (e.g., the camera module 180 of FIG. 1), the concept of an 'optical axis O-I' may be mentioned. In a view of an optical system including the camera module 300, the optical axis may be illustrated as a line (a virtual line) connecting the centers of lenses (the centers of a plurality of lenses when there are the plurality of lenses). For example, the optical axis may be illustrated as a line passing through the center of curvature of the surface of the first lens (e.g., the first lens) from the object side O toward the object side and the center of curvature of the surface of the last lens (e.g., the nth lens from the object side toward the image side I. According to another embodiment, the optical axis may be illustrated as a line passing through the center of the image sensor as well as the plurality of lenses. According to an embodiment, the optical axis may be understood as a 'rotation center axis' in which optical performance does not change when rotating about an axis. In the following description, the 'optical axis O-I direction' may refer to, e.g., a first direction (Z-axis direction), and a 'direction substantially perpendicularly crossing the optical axis O-I (hereinafter, abbreviated as a 'direction perpendicular to the optical axis O-I')' may refer to, e.g., a second direction (X-axis direction) or a third direction (Y-axis direction).

Referring to FIG. 4, the camera module 300 may include a camera housing 301, a lens assembly 302, an image sensor 303, a first carrier 340, a second carrier 350, and/or a driving member 360. Further, the camera module 300 may include at least one printed circuit board (PCB) (e.g., the first substrate 331, the second substrate 333, and/or the third substrate 364). According to an embodiment, the at least one substrate may be a flexible printed circuit board (FPCB). **In** the embodiment of FIG. 4 or less, the camera module 300 may target a vertical camera module.

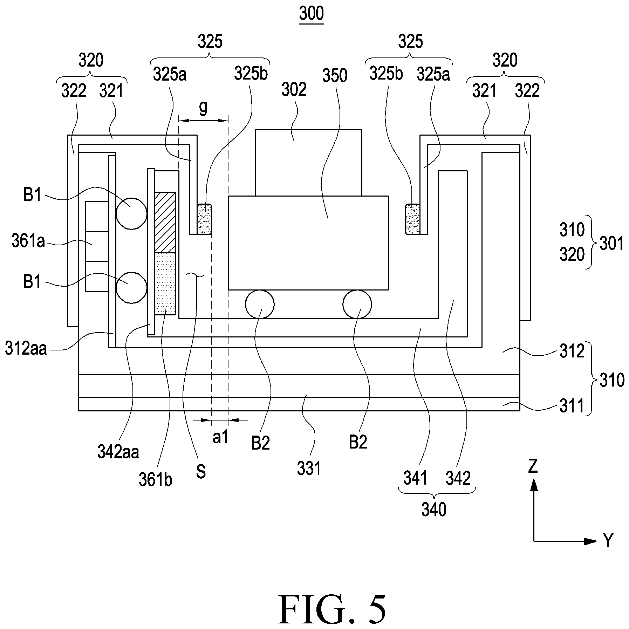

The camera housing 301 may include a base housing 310 and a cover housing 320. The base housing 310 may be a portion that refers to a base of the camera housing 301, and the cover housing 320 may be a portion that is coupled to the base housing 310 to form a space (e.g., the space S of FIG. 5 to be described below) in which various components may be mounted inside the camera housing 301. According to an embodiment, the base housing 310 may be referred to as a "first housing", and the cover housing 320 may be referred to as a "second housing or a shield can". Referring to FIG. 4, according to an embodiment, a side wall may be formed to at least partially surround components accommodated in the cover housing 320, and additionally or alternatively, a plurality of side walls may be formed in the base housing 310. For example, the cover housing 320 may include a cover plate 321 and a side plate 322 extending from an edge of the cover plate 321 in the height direction (e.g., the -Z-axis direction) of the camera module 300. According to an embodiment, the direction in which the side plate extends, that is, the height direction, may be defined or referred as a direction parallel to the optical axis. As another example, the base housing 310 may include a base plate 311 and a base side wall 312. According to an embodiment, it may extend from the base plate 311 in the height direction (e.g., the +Z-axis direction), but is not necessarily limited thereto. According to an embodiment, the base side wall 312 may be a component separated from the base plate 311. According to an embodiment, the cover plate 321 and the base plate 311 may be parallel to each other, and the side plate 322 and the base side wall 312 may be formed to extend in directions opposite to each other with respect to the cover plate 321 for the side plate 322 and with respect to the base plate 311 for the base side wall 312. The camera housing 301 is not limited to any specific shape, but may have various shapes according to embodiments. The camera housing 301 may form an outer appearance of the camera module 300 together with the lens assembly 302. According to an embodiment, the total height of the camera module 300 in the vertical camera module may be measured as a height from the bottom surface of the camera module 300 to the end of the lens assembly 302. In comparison, the height from the bottom surface of the camera module to the end of the camera housing 301 may be referred to as a shoulder height of the camera module.

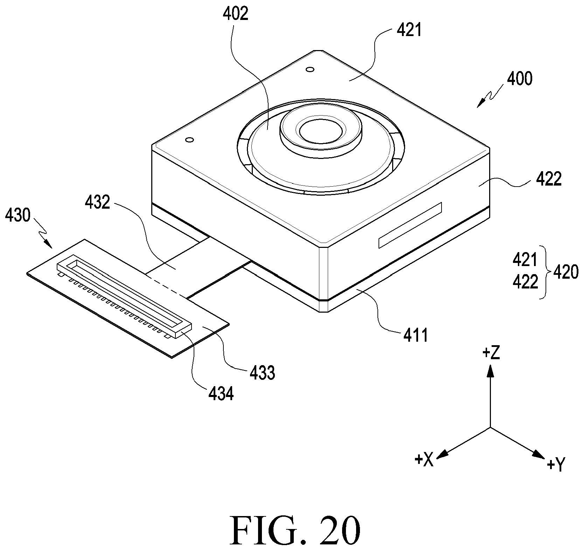

The lens assembly 302 may include at least one lens 302a aligned along the optical axis O-I. The lens assembly 302 may be at least partially accommodated in the camera housing 301. According to an embodiment, the lens assembly 302 may be at least partially accommodated in the camera housing 301 while being surrounded by the lens barrel 302b. The lens assembly 302 may dispose externally incident light in an appropriate number according to specifications required by the camera module 300 or the electronic device (e.g., the electronic device 101 of FIG. 1). The number of lenses included in the lens assembly 302 may not be limited to any particular embodiment. According to an embodiment, the lens assembly 302 may be disposed to partially protrude toward the outside of the camera housing 301 while being at least partially accommodated in the camera housing 301. For example, a portion of the lens assembly 302 may be disposed inside the camera housing 301 and a portion of the lens assembly 302 may be disposed outside the camera housing 301 over the cover opening 324 of the cover plate 321 included in the cover housing 320. According to an embodiment of the disclosure, the position of the lens assembly 302 may be fixed or varied in the camera housing 301 according to the focusing operation (e.g., AF) and the shake correction operation (e.g., OIS) of the camera module 300. For example, in the case of a lens shift type camera module 300, the lens assembly 302 may focus or guide light incident on the lens assembly to the inside of the camera housing 301 as the position of the lens assembly 302 is varied with respect to the camera housing 301. As another example, in the case of an image sensor shift type camera module (e.g., the camera modules 400 and 500 described below with reference to FIG. 20), the lens assembly may focus or guide light to the inside of the camera housing in a state in which the position is fixed with respect to the camera housing. In the following embodiments of FIG. 4, for convenience of description, the camera module 300 of the lens shift type is described as an example, but it should be noted that the scope of the disclosure does not exclude the camera module of the image sensor shift type (e.g., the camera module 400 or 500 to be described below with reference to FIG. 20).

The image sensor 303 may be disposed on one surface of the first substrate 331. For example, the image sensor 303 may be disposed on the surface 331a of the first substrate 331 facing in the +Z-axis direction. The image sensor 303 may include, e.g., a sensor such as a complementary metal-oxide semiconductor (CMOS) or a charge coupled device (CCD). The image sensor 303, however, is not limited thereto but may rather include various elements that convert light, e.g., an object image, into an electrical image signal. The image sensor 303 may detect brightness, contrast ratio information, or color information about the subject from the light which has been transmitted through the lens assembly 302, thereby obtaining an image for the object. When the camera module 300 of the disclosure corresponds to the lens shift type, the position of the image sensor may be fixed while the image sensor is disposed on the first substrate 331. Alternatively, when the camera module 300 of the disclosure corresponds to the image sensor shift type, the position may be changed while the image sensor is disposed on the first substrate. For example, when the camera module 300 is of an image sensor shift type, the image sensor 303 of the disclosure may be moved in the X-axis, Y-axis, and/or Z-axis directions by the driving member 360. The image sensor 303 may be disposed on one surface of the first substrate 331 toward the lens assembly 302. According to an embodiment, the first substrate 331 is a printed circuit board having the image sensor 303 disposed on one surface thereof, and may be parallel to a plane (hereinafter, referred to as an "XY plane") formed by the X-axis and the Y-axis among the spatial coordinate axes illustrated in FIG. 4. An electrical signal obtained from the image sensor 303 through the first substrate 331 may be applied to another component (e.g., an image signal processor) electrically connected to the first substrate 331. The first substrate 331 may be electrically connected to the second substrate 333. It may be connected to other components (e.g., the processor 120 of FIG. 1) disposed outside the camera housing 301 through at least one connector 334 disposed on the second substrate 333. According to an embodiment, the position of the second substrate 333 may be fixed with respect to the camera housing 301. For example, in the image sensor shift type camera module, the first substrate 331 may move while the second substrate is fixed. In this case, the connection member 332 (e.g., the first FPCB 332) may be disposed between the first substrate 331 and the second substrate 333, so that the electrical connection between the first substrate 331 and the second substrate 333 may be stably maintained. According to an embodiment, the base side wall 312 of the base housing 310 may be aligned along the edge of the first substrate 331. According to an embodiment, the image sensor 303 may be provided as an image sensor assembly 330 where components such as the first substrate 331 and the second substrate 333 are coupled.

The base housing 310 may be stacked up on the first substrate 331. According to an embodiment, the base housing 310 may be disposed to at least partially surround the image sensor 303 on the surface 331a of the first substrate 331 facing in the +Z-axis direction. The base housing 310 may include a base plate 311 and a base side wall 312 having a base opening 314 formed at a position overlapping the image sensor 303 and surrounding the base opening 314. According to an embodiment, the filter 335 may be disposed in the base opening 314. As the filter 335, e.g., an IR cut filter for blocking infrared (IR) light may be disposed, and the IR cut filter may overlap the image sensor 303 in the optical axis direction when disposed in the base opening 314. According to an embodiment, the base side wall 312 is a portion extending in the height direction (e.g., the +Z-axis direction) along the edge of the base plate 311, and may include a plurality of base side walls 312a, 312b, 312c, and 312d facing in different directions. For example, the base side wall 312 may include a first base side wall 312a, a second base side wall 312b, a third base side wall 312c, and a fourth base side wall 312d. The base housing 310 may accommodate the first carrier 340 in a space surrounded by the inner surfaces of the base plate 311 and the base side wall 312. According to an embodiment, a side opening may be formed in at least one of the plurality of base side walls 312a, 312b, 312c, and 312d. A coil and a magnet of the driving member 360, which is described below, may be disposed in the side opening. For example, as illustrated in FIG. 4, among the plurality of base side walls 312a, 312b, 312c, and 312d, the first side opening 313a, the second side opening 313b, and the third side opening 313c are formed in the first base side wall 312a, the second base side wall 312b, and the third base side wall 312c, respectively. According to an embodiment, a guide rail (e.g., the first guide rail 312aa) for moving a guide ball (e.g., the first guide ball B1) may be formed on one side wall (e.g., the first base side wall 312a) of the plurality of base side walls 312a, 312b, 312c, and 312d. The embodiment illustrated in FIG. 4 illustrates that the base side wall 312 includes a second base side wall 312b and a fourth base side wall 312d having a surface facing in the second direction (X-axis direction), and includes a first base side wall 312a and a third base side wall 312c having a surface facing in the third direction (Y-axis direction), but it should be noted that this is merely an example for convenience of description. For example, when viewed from thereabove, the base side wall 312 may be formed in a rectangular shape such as a hexagon or an octagon as a whole, or in various irregular shapes and, in that case, it should be noted that the base side wall 312 may include more or fewer base side walls than the above-mentioned example of the base side wall. This may be applied to the following description of the carrier members 340 and 350 and the description of other components such as the cover housing 320.

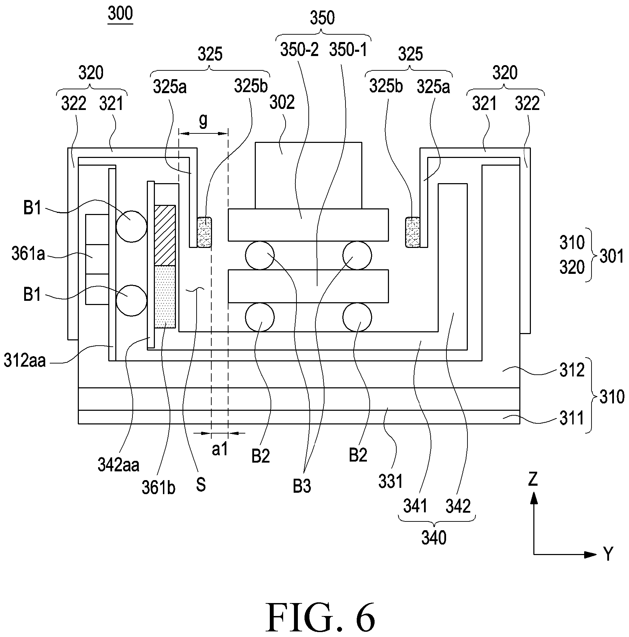

The camera module 300 may include a carrier member to guide to reciprocate the lens assembly 302 in the direction along the optical axis O-I, i.e., the optical axis direction (e.g., the first direction) and/or a direction (e.g., the second direction or the third direction) substantially perpendicular to the optical axis. For reference, in the image sensor shift type, the carrier member may guide the first substrate where the image sensor is disposed to reciprocate in the optical axis direction (e.g., the first direction) and/or to reciprocate in the direction (e.g., the second direction or the third direction) substantially perpendicular to the optical axis. The camera module 300 may include a carrier member composed of at least two carriers. For example, the carrier member may include a first carrier 340 and a second carrier 350. The carrier member may further include at least one carrier (e.g., a third carrier) according to an embodiment (which is described below in detail with reference to FIG. 6). According to an embodiment, the carrier member 340 or 350 may be accommodated in the camera housing 301 and may include a first carrier 340 disposed on the first substrate 331. Further, the carrier member 340 or 350 may include a second carrier 350 disposed on the first carrier. Here, 'a component is disposed on another component' may merely refer to a positional relationship, and may not necessarily mean that the component and the other component are coupled to each other. Further, an arrangement relationship between the component and the other component is not excluded. For example, "the first carrier 340 is disposed on the first substrate 331" merely means a positional relationship, and does not necessarily mean that the first substrate 331 and the first carrier 340 are coupled. Further, "the first carrier 340 is disposed on the first substrate 331" does not exclude an arrangement relationship between the first carrier 340 and another component (e.g., the base housing 310). According to an embodiment, the first carrier 340 may be disposed on the first substrate 331 in a state of being coupled to the base housing 310. Here, the 'coupling' may mean that a component is connected to another component, and may include all physical forms of connection such as fastening, assembling, etc. The coupling may include not only a direct connection between a component and another component, but also an indirect connection via another component. The first carrier 340 may be coupled to the base housing 310 via a guide ball (e.g., the first guide ball B1). According to an embodiment, since the first carrier 340 is configured to be movable in the optical axis direction (e.g., the first direction (the Z-axis direction)), and this is related to an auto focus (AF) operation, the first carrier 340 may be referred to as an "AF carrier". The second carrier 350 may linearly reciprocate in a direction (e.g., the second direction (X-axis direction) or the third direction (Y-axis direction)) substantially perpendicular to the optical axis while being disposed on the first carrier 340. Since the movement in the direction substantially perpendicular to the optical axis is related to an optical image stabilization (OIS) operation, the second carrier 350 may be referred to as an 'OIS carrier'.

The first carrier 340 may include a first optical opening 344 formed at a position overlapping the image sensor 303 and a first plate 341 at least partially surrounding the first optical opening 344, and may include a first side wall 342 protruding from the first plate 341 in the optical axis direction. In the state in which the first carrier 340 is coupled to the base housing 310, the first side wall 342 may face the base side wall 312 of the base housing 310. According to an embodiment, the first side wall 342 is a portion protruding in the optical axis direction along the edge of the first plate 341, and may include a plurality of first side walls 342a, 342b, 342c, and 342d facing in different directions. For example, the first side wall 342 may include a 1-1th side wall 342a, a 1-2th side wall 342b, a 1-3th side wall 342c, and a 1-4th side wall 342d. The first carrier 340 may be accommodated in a space surrounded by the inner surfaces of the base plate 311 and the base side wall 312 of the base housing 310. In this case, the outer surface of the first side wall 312 of the first carrier 340 may at least partially face the inner surface of the base side wall 312. Further, the first carrier 340 may accommodate the second carrier 350 in a space surrounded by the inner surfaces of the first plate 341 and the first side wall 342. According to an embodiment, a magnet may be disposed on at least one of the plurality of first side walls 342a, 342b, 342c, and 342d. For example, referring to FIG. 4, a first magnet 361b included in the driving member 360 to be described below may be disposed on the 1-1th side wall 342a. According to an embodiment, the first magnet 361b may be bonded to and fixedly disposed on the outer surface of the 1-1th side wall 342a of the first carrier 340. On the outer surface of the 1-1th side wall 342a, at least one guide rail 342aa may be formed in an area adjacent to the position where the first magnet 361b is disposed. The at least one guide rail 342aa may extend long in parallel with the optical axis direction. A plurality of first guide balls B1 may be mounted and rolled on the at least one guide rail 342aa. According to an embodiment, two guide rails 342aa may be disposed on both left and right sides of the first magnet 361b. Correspondingly, the guide rail 312aa may be formed on the inner surface of the first base side wall 312a of the inner surface of the base side wall 312 of the base housing 310. According to an embodiment, a plurality of first guide balls B1 may be interposed between the guide rail 312aa formed on the base side wall 312 and the guide rail 342aa formed on the first side wall 342. The first guide ball B1 may be disposed to contact each of the inner surfaces of the guide rails 312aa and 342aa in a state in which the guide rail 312aa formed on the base side wall 312 and the guide rail 342aa formed on the first side wall 342 are spaced apart from each other by a designated interval, and may operate in a ball bearing manner. By including the first guide ball B1, the camera module 300 may reduce the frictional force generated in the reciprocating motion of the lens barrel 302b (or the first substrate 331 including the image sensor 303) in the optical axis direction (e.g., the first direction (the Z-axis direction)). The guide rails 312aa and 342aa may be grooves having a cross section of a 'V' shape. Further, a recess 343 may be formed in at least another one of the plurality of first side walls 342a, 342b, 342c, and 342d. The recess 343 may be a portion in which at least one magnet (e.g., the second magnet 362b and the third magnet 363b) disposed on the second carrier 350 to be described below and a protruding guide portion 353 supporting the at least one magnet may be accommodated. For example, referring to FIG. 4, a first recess 343a and a second recess 343b may be formed in the 1-2th side wall 342b and the 1-3th side wall 342c, respectively.

The second carrier 350 may be disposed on the first carrier 340. According to an embodiment, the second carrier 350 may be stacked up on the surface 341a of the first carrier 340 facing in the +Z-axis direction (the first direction) via the second guide ball B2. According to an embodiment, the second carrier 350 may not be fixedly coupled to the first carrier 340 via the second guide ball B2, but may be coupled so that the relative positions thereof may be changed. The second carrier 350 may include a second optical opening 354 formed at a position overlapping the image sensor 303 and a second plate 351 at least partially surrounding the second optical opening 354, and may include a second side wall 352 protruding from the second plate 351 in the optical axis direction. According to an embodiment, the second side wall 352 may be formed in a ring shape when viewed from thereabove. According to an embodiment, the second side wall 352 may be a portion defining the second optical opening 354. At least a portion of the lens assembly 302 may be accommodated in the second optical opening 354. The second carrier 350 may be accommodated in a space surrounded by the inner surfaces of the first plate 341 and the first side wall 342 of the first carrier 340 and, in this case, at least a portion of the outer surface of the second side wall 352 of the second carrier 350 may at least partially face the inner surface of the first side wall 342. The second carrier 350 may include at least one protruding guide portion 353, at least one carrier stopper 355, and a second fastening portion 356 around the second side wall 352. The protruding guide portion 353 may be a portion at least partially protruding from the second plate 351 and/or the second side wall 352 in a direction (e.g., the second direction or the third direction) perpendicular to the optical axis. According to an embodiment, the protruding guide portion 353 may include a first protruding guide portion 353a protruding in the second direction (X-axis direction) and a second protruding guide portion 353b protruding in the third direction (Y-axis direction). The protruding guide portion 353 may serve to support the magnet, and may be a portion at least partially accommodated in the recess 343 of the first carrier 340 as described above. The carrier stopper 355 may serve to limit the operating range of the second carrier 350 so that the second carrier 350 does not deviate from a designated distance or area. The carrier stopper 355 may serve as a counter stopper of the first stopper 325 formed in the cover housing 320 to be described below. According to an embodiment, the second fastening portion 356 may be coupled to the fastening end portion 302c of the lens assembly 302 to fix the lens assembly 302 to the second carrier 350. For example, as the fastening end portion 302c of the lens assembly 302 is inserted into the second fastening portion 356, the lens assembly 302 and the second carrier 350 may be fixedly coupled to each other. Accordingly, the lens assembly 302 may be moved while being restrained by the second carrier 350. However, the embodiment of FIG. 4 is for the camera module 300 of the lens shift type as described above, and when the camera module of the image sensor shift type is applied, a coupling relationship between components different from those above may be implemented. For example, in the image sensor shift type camera module, the lens assembly 302 may be fixedly coupled to the camera housing 301 (e.g., the cover housing 320) rather than the second carrier 350, and thus the configuration of the second fastening portion 356 provided in the second carrier 350 may be omitted. A plurality of guide balls (e.g., a plurality of second guide balls B2) may be interposed between the first carrier 340 and the second carrier 350. To that end, a plurality of guide grooves 341b may be formed in the surface 341a of the first carrier 340 facing in the +Z-axis, and a plurality of guide grooves (not shown) may also be formed in the surface of the second carrier 350 facing in the -Z-axis. The second guide ball B2 may be disposed to contact the inner surfaces of the guide grooves in a state in which the guide groove 341b formed in the first carrier 340 and the guide groove (not shown) formed in the second carrier 350 are spaced apart from each other by a designated interval, and may operate in a ball bearing manner in a state in which the second guide ball B2 is disposed to support the second carrier 350 on the first carrier 340. By including the second guide ball B2, the camera module 300 may reduce the frictional force generated in the reciprocating motion in the direction (e.g., the second direction (X-axis direction) and the third direction (Y-axis direction)) substantially perpendicular to the optical axis of the lens barrel 302b (or the first substrate 331 including the image sensor 303). The diameters of the plurality of guide grooves 341b provided in the first carrier 340 and the plurality of guide grooves provided in the second carrier 350 may be larger than the diameter of the guide ball. For example, the guide ball may move with respect to the first carrier 340 within an area or range designated by the guide groove, and accordingly, the movement range of the second carrier 350 on the XY plane may be determined. As is described below with reference to FIG. 5, the movement range of the second carrier 350 determined as it is no longer moved by the first stopper 325 may be smaller than the movement range of the second carrier 350 determined by the guide ball and the guide groove. FIG. 4 illustrates four guide balls as the plurality of second guide balls B2, and accordingly, four guide grooves may be formed in each of the first carrier 340 and the second carrier 350. However, the disclosure is not necessarily limited thereto, and as the guide balls, at least two balls may be provided, and at least two guide grooves corresponding thereto may be provided. When there is only one guide ball, the carrier may rotate on the XY plane. Therefore, to prevent this, other various embodiments for the first carrier 340 and the second carrier 350 may apply to any configuration in which at least two balls are provided as the guide balls, and at least two guide grooves corresponding thereto are provided.

Referring to FIG. 4, the driving member 360 may include at least one coil and at least one magnet disposed to at least partially face the at least one coil. The at least one magnet may be disposed to face the at least one coil in a state of facing in the direction (e.g., the second direction (X-axis direction) or the third direction (Y-axis direction)) substantially perpendicular to the optical axis or may be disposed to face the at least one coil in a state of facing in the optical axis direction (e.g., the first direction (Z-axis direction)). FIG. 4 illustrates a state in which at least one magnet is disposed to face at least one coil in a state of facing in the direction (e.g., the second direction (X-axis direction) or the third direction (Y-axis direction)) substantially perpendicular to the optical axis. A plurality of driving members 360 may be provided. According to an embodiment, the driving member 360 may include a first driver 361, a second driver 362, and a third driver 363. In this case, the first driver 361 may be an auto focus (AF) driver (hereinafter, referred to as an 'AF driver') for automatically focusing the camera module 300, and the second driver 362 and the third driver 363 may be optical image stabilization (OIS) drivers (hereinafter, referred to as 'OIS drivers') for optical image stabilization (OIS) of the camera module 300.

The first driver 361 may include a first coil 361a and a first magnet 361b. According to an embodiment, the first coil 361a may be accommodated in a first side opening 313a formed in one (e.g., the first base side wall 312a) of the base side walls 312 of the base housing 310. The first magnet 361b may be disposed at a position corresponding to the first coil 361a on one (e.g., the 1-1th side wall 342a) of the first side walls 342 of the first carrier 340. The second driver 362 may include a second coil 362a and a second magnet 362b. According to an embodiment, the second coil 362a may be accommodated in the second side opening 313b formed in another one (e.g., the second base side wall 312b) of the base side walls 312 of the base housing 310. The second magnet 362b may be disposed at a position corresponding to the second coil 362a in the first protruding guide portion 353a of the second carrier 350. The third driver 363 may include a third coil 363a and a second magnet 363b. According to an embodiment, the third coil 363a may be accommodated in the third side opening 313c formed in another one (e.g., the third base side wall 312c) of the base side walls 312 of the base housing 310. The third magnet 363b may be disposed at a position corresponding to the third coil 363a in the second protruding guide portion 353b of the second carrier 350. The first coil 361a, the second coil 362a, and the third coil 363a may be disposed in the side openings 313a, 313b, and 313c, respectively, formed in the base housing 310. The first magnet 361b may be fixedly disposed on the first carrier 340 to move together when the first carrier 340 moves. The second magnet 362b and the third magnet 363b may be fixedly disposed on the second carrier 350 to move together when the second carrier 350 moves.

According to an embodiment, the camera module 300 may include at least one yoke (e.g., the first yoke 361c). At least one yoke (e.g., the first yoke 361c) may be provided, e.g., to align an electric field and/or a magnetic field generated in the driving member 360 within a designated area or space, or may serve to increase the intensity of the electric/magnetic force. For example, at least one yoke (e.g., the first yoke 361c) allows an electric field and/or a magnetic field generated in the driving member 360 to act within a designated area or space, thereby reducing power applied to the at least one coil 361a or contributing to downsizing the driving member 360. According to an embodiment, by reducing power consumption or downsizing the driving member 360, it is possible to easily mount the camera module 300 in a downsized electronic device and to increase power efficiency in an auto focus operation or an optical image stabilization operation. According to an embodiment, at least one yoke (e.g., the first yoke 361c) may be disposed adjacent to the at least one coil 361a. For example, the first driver 361 may include a first yoke 361c disposed adjacent to the first coil 361a. The first yoke 361c included in the first driver 361 may be positioned on the opposite side of the first magnet 361b with respect to the position of the first coil 361a. Although FIG. 3 does not show a yoke other than the first yoke 361c, according to an embodiment, a yoke corresponding to the second coil 362a of the second driver 362 and/or the third coil 363a of the third driver 363 may be additionally provided. Hereinafter, in describing the first driver 361, the second driver 362, and/or the third driver 363, a description of the yoke (e.g., the first yoke 361c) may be omitted for convenience when referring to the interaction between the coil and the magnet.

Each of the second driver 362 and the third driver 363 may include a second reinforcing plate 362d positioned on the opposite side of the second magnet 362b with respect to the position of the second coil 362a included in the second driver 362, and a third reinforcing plate 363d positioned on the opposite side of the third magnet 363b with respect to the position of the third coil 363a included in the third driver 363. The second reinforcing plate 362d and the third reinforcing plate 363d are non-magnetic reinforcing plates and may be provided to arrange the second coil 362a and the third coil 363a, respectively.

The first driver 361, the second driver 362, and the third driver 363 may include at least one sensor (e.g., a hall sensor) for measuring displacement of each component according to an operation of each driver. According to an embodiment, at least one sensor (e.g., a hall sensor) may be provided in each of the at least one coil 361a, 362a, or 363a, and may measure the amount of movement of the lens assembly (or the image sensor) in the optical axis direction (e.g., the first direction (Z-axis direction)) or in a direction (e.g., the second direction (X-axis direction) or the third direction (Y-axis direction)) substantially perpendicular to the optical axis.

According to an embodiment, the camera module 300 may further include a third substrate 364. According to an embodiment, the third substrate 364 may physically connect some components included in the first driver 361, the second driver 362, and the third driver 363, such as a coil (e.g., the first coil 361a, the second coil 362a, and the third coil 363a) and a sensor (e.g., a hall sensor), and may electrically connect at least some components to each other or connect the components with external components (e.g., a processor, an image signal processor (ISP), or a driving driver IC).

The cover housing 320 may be configured to at least partially surround the components of the camera module including the first carrier 340 and the second carrier 350 on the second carrier 350. The cover housing 320 may include a cover plate 321 having a cover opening 324 where the lens assembly 302 is disposed, and a side plate 322 extending from an edge of the cover plate 321 in the height direction (e.g., the -Z-axis direction) of the camera module 300. For reference, the cover opening 324 may be omitted in the image sensor shift type. According to the disclosure, the electronic device may include a first stopper 325 protruding from the camera housing 301 (e.g., the cover housing 320) in the optical axis O-I direction (e.g., the -Z axis direction). The first stopper 325 may protrude from a portion 323 defining the cover opening 324 in the cover plate 321 toward the space S inside the housing 301. According to an embodiment, the first stopper 325 may protrude in the same direction to be parallel to the side plate 322. According to an embodiment, as the first stopper 325, a plurality of first stoppers 325 may be provided. According to an embodiment, e.g., when the cover plate 321 has a rectangular (e.g., square) shape as illustrated in FIG. 4, the plurality of first stoppers 325 may protrude from the portion 323 defining the cover opening 324 in the direction of the four vertices of the cover plate 321 toward the space S inside the camera housing 301 along the optical axis direction (e.g., the - Z axis direction). The camera module 300 may absorb and/or disperse the impact applied to the camera module 300 in a direction (e.g., the second direction (X-axis direction) or the third direction (Y-axis direction)) substantially perpendicular to the optical axis using the first stopper 325 protruding from the portion defining the cover plate 321 and the cover opening 324, and may reduce noise. The first stopper 325 is described below in detail with reference to FIG. 5.

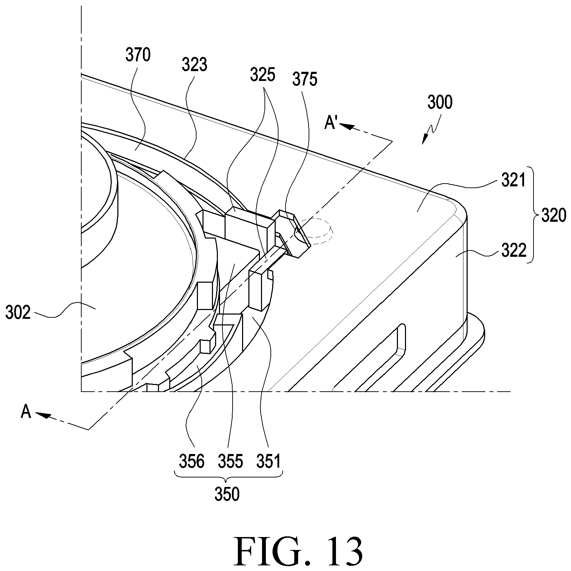

According to an embodiment, the camera module 300 may further include a frame 370. The frame 370 may be disposed inside the camera housing 301 and may be disposed on the first carrier 340 and/or the second carrier 350. According to an embodiment, when the second carrier 350 is accommodated in the first carrier 340, the frame 370 may at least partially overlap the first carrier 340 and the second carrier 350 to surround the first carrier 340 and the second carrier 350. According to an embodiment, the frame 370 may include a horizontal frame 371 at least partially parallel to the camera housing 301 and a vertical frame 372 protruding from the horizontal frame 371 in the optical axis direction (e.g., the -Z axis direction). According to an embodiment, the frame 370 may be formed of a metal material and/or a non-metal (e.g., polymer) material. The frame 370 may be coupled to the first carrier 340 using the vertical frame 372. The frame 370 may serve to prevent the second carrier 350 from being separated from the first carrier 340 in the height direction. Further, the frame 370 may serve to protect the internal components of the carrier module 300 from an external impact. For example, as illustrated in FIG. 4, the vertical frame 372 may have an opening-shaped fastening structure, which may be coupled to the hook-shaped first fastening portion 342e formed on the first side wall 342 of the first carrier 340. However, this is merely an example, and it should be noted that other various embodiments may apply to the shape of the first fastening portion 342e. In the normal state, the first carrier 340 and the frame 370 may have a predetermined gap. The gap between the first carrier 340 and the frame 370 may be a gap in the height direction of the carrier module 300. This gap may be configured such that the second guide ball B2 is not separated from the guide groove 341b even when the first carrier 340 and the frame 370 are brought into contact with each other by an external impact. According to an embodiment, the camera module 300 may further include a second stopper 375 disposed on the horizontal frame 371. According to an embodiment, as the second stopper 375, a plurality of second stoppers 375 may be provided. According to an embodiment, e.g., when the horizontal frame 371 has a rectangular (e.g., square) shape as illustrated in FIG. 4, the plurality of second stoppers 375 may protrude along the optical axis direction (e.g., the +Z axis direction) facing the cover plate 321 in the direction of the four vertices of the horizontal frame 371. The camera module 300 may absorb and/or disperse an impact applied to the camera module 300 in the optical axis direction (e.g., the first direction (the Z-axis direction)) using the second stopper 375 formed on a surface of the horizontal frame 371 facing the cover plate 321 of the frame 370, and may reduce noise. Hereinafter, the second stopper 375 is described in more detail with reference to FIGS. 13 to 16.

Hereinafter, the first stopper 325 and/or the second stopper 375 included in the camera module 300 of the disclosure is described in more detail with reference to FIGS. 5 to 19. In describing each of the above-described components, no duplicate description is given.

FIG. 5 is a view schematically illustrating a cross section of a camera module in a state in which components of the camera module are assembled according to an embodiment. FIG. 6 is a view schematically illustrating a cross section of a camera module in a state in which components of the camera module are assembled according to an embodiment.

Referring to FIG. 5, a camera module 300 may include a first substrate 331, a base housing 310 including a base plate 311 and a base side wall 312, a cover housing 320 including a cover plate 321 and a side plate 322, a first carrier 340 including a first plate 341 and a first side wall 342, a second carrier 350, and a lens assembly 302. Referring to FIG. 5, the first carrier 340 may be supported from one side of the base housing 310 by a first guide ball B1, the second carrier 350 may be supported from the first carrier 340 by a second guide ball B2, and the lens assembly 302 may be fixedly supported by the second carrier 350. In FIG. 5, the base housing 310 is illustrated as a component separated from the cover housing 320, but unlike this, the base housing 310 may be integrally formed to form one camera housing 301. No duplicate description which has been described above in connection with FIG. 4 may be given of the camera module 300 of FIGS. 5 and 6. For example, FIG. 5 illustrates a first driver including a first coil 361a, a first magnet 361b, and a first guide ball B1 for an AF operation, and rails 312aa and 342aaa where the first guide ball B1 moves, but the second driver and the third driver may be omitted except for the second guide ball B2. Further, the frame 370 may be omitted in FIGS. 5 and 6 for convenience of description. As illustrated in FIG. 5, the camera module 300 has a space S formed inside the camera housing 301, and the AF operation and the OIS operation may be implemented by the movement of the first carrier 340 and the second carrier 350 in the space S. If the impact on the camera module continues, such as the impact applied from the outside when not powered, the rails 312aa and 342aa, which are the seating surfaces of the first guide ball B1 of the first carrier 340, may be damaged. Therefore, during AF driving, current consumption may increase or performance may deteriorate under certain conditions. To enhance this, a cushioning member may be applied between the first carrier 340 and the second carrier 350, or a high-strength material may be chosen for the first carrier 340. However, since this only reduces the impact and delays the time when the performance deteriorates, it may not be the fundamental solution.

In FIGS. 5 and 6, as a method devised to address this problem, a first stopper 325 may be included which protrudes from the camera housing 301 in the optical axis direction (e.g., the -Z axis direction). According to an embodiment, the first stopper 325 may protrude from the cover plate 321 toward the space S of the camera housing 301. According to an embodiment, a gap g may be present between the first side wall 342 of the first carrier 340 and the second carrier 350 (e.g., the second side wall 352 of the second carrier 350), which may be an optimal distance between the first side wall 342 of the first carrier 340 and the second carrier 350 set considering the assembly or mass production of the camera module. The gap between the first carrier 340 and the second carrier 350 may be a gap in the length direction and/or the width direction of the carrier module 300. In the disclosure, the first stopper 325 may be disposed in the gap g of the inner space S of the camera housing 301. Further, when at least one lens included in the lens assembly 302 and the image sensor are aligned on the optical axis O-I, the first stopper 325 may be spaced apart from the carrier stopper 355 by a predetermined interval a1. By disposing the first stopper 325, it is possible to prevent the second carrier 350 from colliding with the first side wall 342 of the first carrier 340 to damage the first guide ball B1 and/or the rails 312aa and 342aa where the first guide ball B1 is seated. According to an embodiment, the first stopper 325 may include a bent portion 325a extending from the cover plate 321 and an elastomer portion 325b coupled to the bent portion. If the camera module 300 is shaken when not powered, the second carrier 350 hits the first stopper 325, causing noise. By providing the elastomer portion 325b, it is possible to prevent and/or reduce noise. In this case, the first stopper 325 may at least partially overlap the second carrier 350 reciprocating in the Y-axis direction. The elastomer portion 325b may comprise a first member. The first member is capable of elastic deformation. The first member may undergo elastic deformation when hit, impacted, pressed or deformed by contact with the second carrier 350.

FIG. 6 illustrates an embodiment in which the camera module 300 is configured to perform AF driving and OIS driving with three carriers 340, 350-1, and 350-2 rather than two carriers 340 and 350, and may include a 2-1th carrier 350-1 and a 2-2th carrier 350-2 capable of moving in one axial direction in one plane, instead of the second carrier 350 of FIG. 5 capable of moving in two axial directions in one plane (XY plane). For example, the 2-2th carrier 350-2 may move in a direction (e.g., a perpendicular direction) different from the 2-1th carrier 350-1 while being supported on the 2-1th carrier 350-1 by the third guide ball B3. For example, the 2-1th carrier 350-1 may reciprocate in the X-axis direction, and the 2-2th carrier 350-2 may reciprocate in the Y-axis direction. In this case, the first stopper 325 may at least partially overlap the 2-2th carrier 350-2 reciprocating in the Y-axis direction. As such, it may be applied to an embodiment of a camera module including three or more carriers.

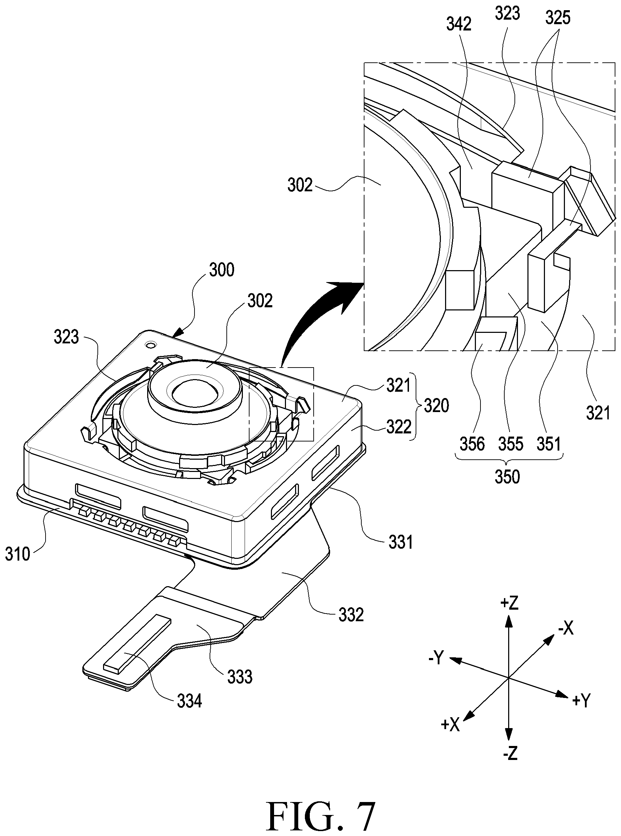

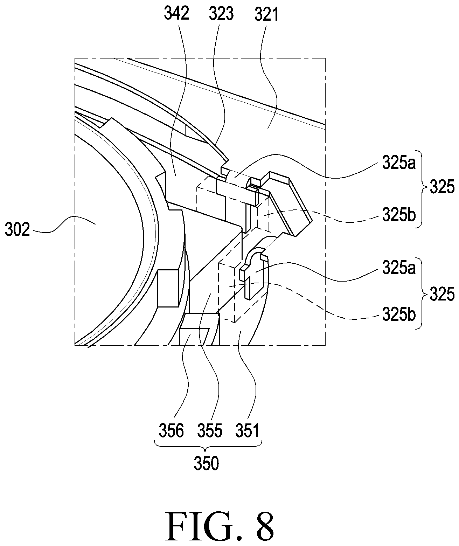

FIG. 7 is a perspective view illustrating a camera module according to an embodiment. FIG. 8 is an enlarged view illustrating a stopper structure according to an embodiment. FIG. 7 may illustrate a state in which the components mentioned in FIG. 4 are coupled. FIG. 8 is an enlarged view of the stopper structure of FIG. 7. No duplicate description which has been made above is given below.

Referring to FIG. 7, a first stopper 325 is formed from a portion 323 defining a cover opening in the cover plate 321. According to an embodiment, the carrier stopper 355 may be formed on at least a portion of the carrier member (e.g., the second carrier 350) corresponding to the first stopper 325. According to an embodiment, the first stopper 325 and the carrier stopper 355 formed on the cover plate 321 may form a stopper structure for protecting the carrier member included in the camera module 300 and components around the carrier member from impact. According to an embodiment, the stopper structure may be formed in four portions symmetrical with respect to one point on the optical axis based on a movement of the carrier member (e.g., the second carrier 350) in the direction perpendicular to the optical axis. For example, referring to FIG. 7, when the second carrier 350 moves in a direction (e.g., the second direction (the X-axis direction) and/or the third direction (the Y-axis direction)) substantially perpendicular to the optical axis (e.g., the OIS operation), the stopper structure including the first stopper 325 and the carrier stopper 355 may be formed in a diagonal direction of the X-axis and the Y-axis between the X-axis and the Y-axis. In this case, the first stopper(s) 325 disposed in the four portions are similar in arrangement shape and position, but specific specifications such as strength according to the size and the material of the elastic member may be formed to be somewhat different from each other considering, e.g., the positions of the coil and the magnet disposed in the camera module 300. In this case, as illustrated in FIG. 7, the first stopper 325 and the carrier stopper 355 may face each other in the second direction (X-axis direction) and/or the third direction (Y-axis direction). The carrier stopper 355 may be formed on the second plate 351 and may be formed as a structure including a surface facing in the second direction (X-axis direction) and/or the third direction (Y-axis direction). The first stopper 325 may be provided as, e.g., a pair of first stoppers 325 respectively facing surfaces of the carrier stopper 355 facing in the second direction (X-axis direction) and/or the third direction (Y-axis direction). The pair of first stoppers 325 each may be interposed between the first side wall 342 of the first carrier 340 and the carrier stopper 355. However, the pair of first stoppers 325 may be spaced apart from the carrier stopper by a predetermined interval (e.g., a1 of FIG. 5) in a state in which at least one lens included in the lens assembly 302 and the image sensor are aligned on the optical axis O-I when not powered. When an impact is applied to the camera module 300 when not powered, the first carrier 340 may move freely with respect to the first stopper 325. When the camera module 300 is impacted, the carrier stopper 355 may simultaneously contact each of the pair of first stoppers 325 or may individually contact one of the pair of first stoppers 325. When power is supplied to the camera module 300, the at least one lens included in the lens assembly 302 and the image sensor may be aligned back on the optical axis O-I, so that the pair of first stoppers 325 may be spaced apart from the carrier stopper 355 again by a predetermined interval (e.g., a1 of FIG. 5).

Referring to FIG. 8, the first stopper 325 may include a bent portion 325a extending from the cover plate 321 and an elastomer portion 325b coupled to the bent portion. FIG. 8 illustrates the elastomer portion 325b by dashed lines for convenience of description. The bent portion 325a is, e.g., a structure integrally extending with the cover plate 321, and may be disposed inside the elastomer portion 325b. According to an embodiment, the elastomer portion 325b may be formed through double injection molding with the bent portion 325a. According to an embodiment, the bent portion 325a is a wedge-shaped structure, and may serve to firmly fix the elastomer portion 325b from the inside.

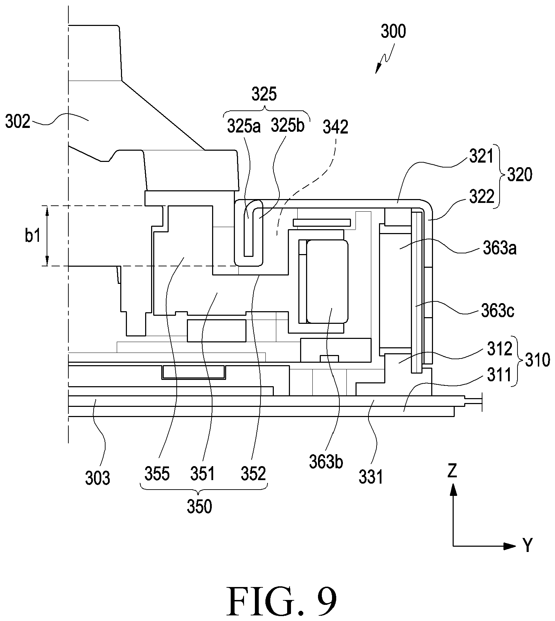

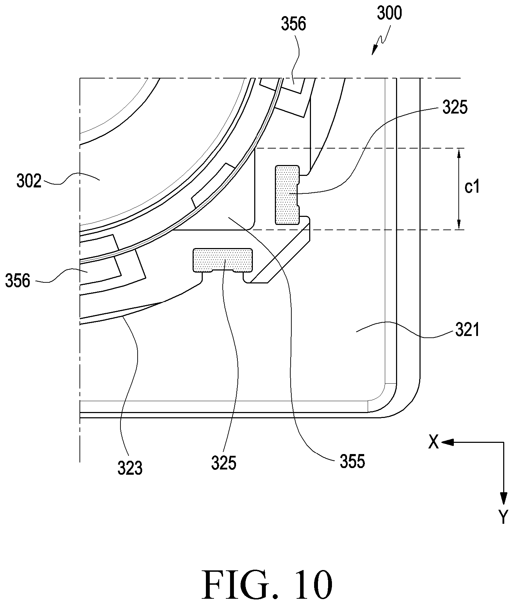

FIG. 9 is a cross-sectional view illustrating a portion of a camera module 300 according to an embodiment. FIG. 10 is a front view illustrating a portion of a camera module 300 according to an embodiment.

FIG. 9 may illustrate a state in which a length at which the carrier stopper 355 and the first stopper 325 maximally overlap is maximum. Referring to FIG. 9, the first length b1 in which the carrier stopper 355 and the first stopper 325 overlap each other may be larger than a difference (e.g., b2 to be described below) between the maximum height and the minimum height of the carrier member 340 or 350 when the carrier member 340 or 350 moves in the optical axis direction when the focusing function is implemented. The carrier stopper 355 of the second carrier 350 and the first stopper 325 of the cover housing 320 may overlap each other by a predetermined length (the first length b1) when viewed from a direction perpendicular to the optical axis, as the first stopper 325 protrudes from the cover plate 321 in the optical axis direction (e.g., the -Z-axis direction). The first length b1 may be a length set when the camera module 300 is not powered. According to an embodiment, when the camera module 300 performs auto focus (AF) driving, the first carrier 340 and the second carrier 350 may reciprocate in the optical axis direction (Z-axis direction), and the first length b1 may be set to a length at which the movement of the first carrier 340 and the second carrier 350 in the optical axis direction (Z-axis direction) is interfered with by the first stopper 325. For example, when the difference between the position of the carrier member when the camera module 300 is focused to photograph a subject in an infinite position and the position of the carrier member when the camera module 300 is focused to photograph a subject in a macro position is b2, the first length b1 at which the first stopper 325 and the carrier stopper 355 overlap may be set to be larger than b2.

A width of a stopper having a larger width between the carrier stopper 355 and the first stopper 325 may be larger than a maximum stroke (e.g., c2 to be described below) when the stopper moves in a direction perpendicular to the optical axis. In the embodiment illustrated in FIG. 10, as a case in which the width of the carrier stopper 355 is larger than the width of the first stopper 325, the width c1 of the carrier stopper 355 may be larger than the maximum stroke (e.g., c2 to be described below) when the carrier member 340 or 350 moves in a direction perpendicular to the optical axis. FIG. 10 illustrates the camera module 300 viewed from thereabove, and illustrates a state in which the carrier stopper 355 and the pair of first stoppers 325 face each other while being spaced apart from each other by a predetermined distance in the second direction (X-axis direction) and/or the third direction (Y-axis direction). During the shake correction operation (e.g., during the OIS operation), the carrier member (e.g., the second carrier 350) may move in the second direction (X-axis direction) and/or the third direction (Y-axis direction). In this case, when the distance (maximum stroke) at which the carrier member (e.g., the second carrier 350) may move maximally in a direction substantially perpendicular to the optical axis is c2, the width c1 of the carrier stopper 355 should be larger than the width corresponding to the maximum stroke c2 so that the function of the stopper may be normally implemented without interfering with the OIS operation.

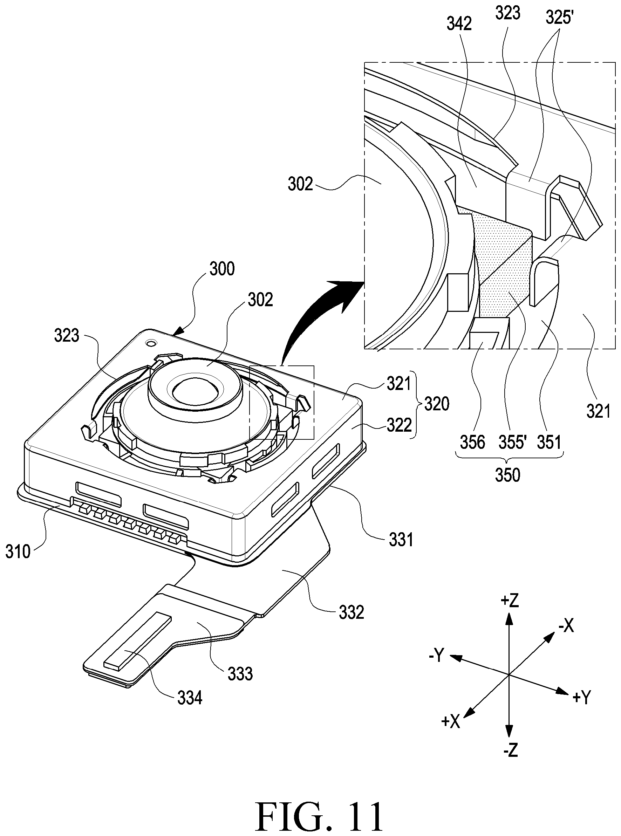

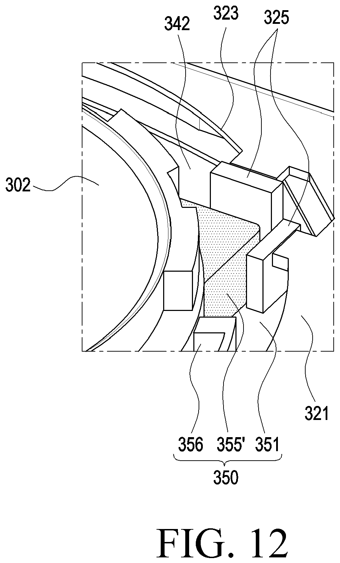

FIG. 11 is a perspective view illustrating a camera module according to an embodiment. FIG. 12 is an enlarged view illustrating a first stopper according to an embodiment.

Unlike the first stopper 325 including the bent portion 325a and the elastomer portion 325b illustrated in FIGS. 7 and 8, the first stopper 325' including only the bent portion element is illustrated in the embodiment of FIG. 11. In the embodiment of FIG. 11, it is illustrated that the elastic member is formed on the carrier stopper 355' rather than on the first stopper 325'. The elastic member may comprise a first member. The first member is capable of elastic deformation. The first member may undergo elastic deformation when hit, impacted, pressed or deformed by contact with the first stopper 325'.

In the embodiment of FIG. 12, an elastic member may be formed in the carrier stopper 355' together with the first stopper 325 including both the bent portion 325a and the elastomer portion 325b. In the embodiment of FIG. 12, the damping effect of the stopper structure may be enhanced compared to the previous embodiments of FIGS. 7, 8, and 11. According to an embodiment, in both the embodiments of FIGS. 11 and 12, the material strength, shape, and the like of the elastic member may vary according to embodiments, but the conditions of the first length b1 and the width c1 described above with reference to FIGS. 9 and 10 with respect to the stopper structure should be met.

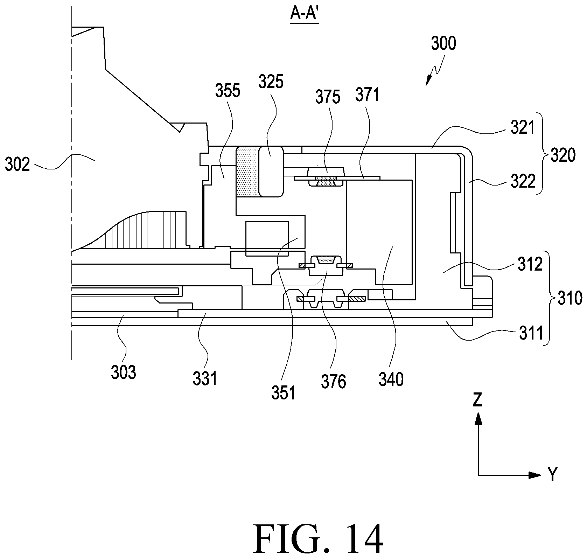

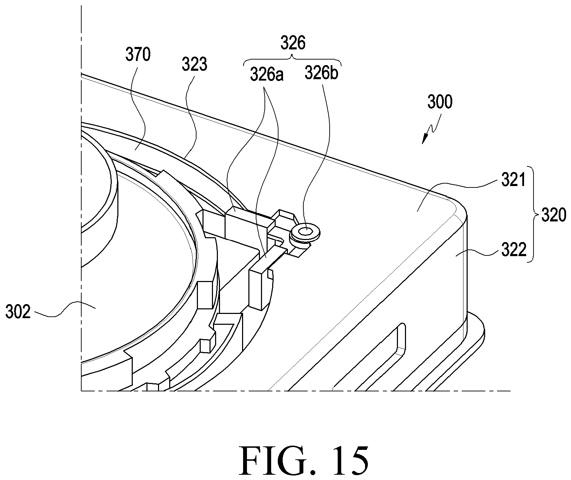

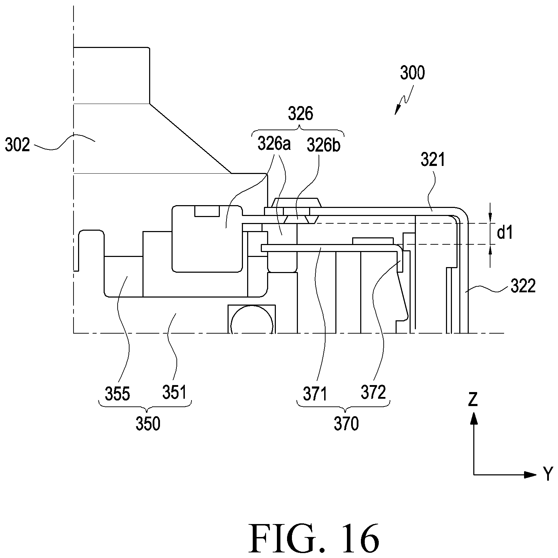

FIG. 13 is an enlarged view illustrating a first stopper and a second stopper according to an embodiment. FIG. 14 is a cross-sectional view illustrating a portion of a camera module including a first stopper and a second stopper according to an embodiment. FIG. 15 is an enlarged view illustrating a first stopper and a second stopper according to an embodiment. FIG. 16 is a cross-sectional view illustrating a portion of a camera module including a first stopper and a second stopper according to an embodiment. Here, FIG. 14 may be a cross-sectional view of the camera module of FIG. 13 taken along line A-A'.

Referring to FIGS. 13 and 14, a first stopper 325 may be provided to prevent damage caused by collision between components included in the camera module 300 in OIS driving of the carrier member 340 or 350, and a second stopper 375 may be provided to prevent damage caused by collision between components included in the camera module 300 in AF driving. The first stopper 325 may protrude from the cover housing 320 in the optical axis direction, and the second stopper 375 may be structured to protrude from the horizontal frame 371 of the frame 370 in the optical axis direction. According to an embodiment, a separate second stopper 376 may be provided on the rear surface of the first carrier 340 to prevent damage caused by collision between components disposed inside the camera module 300 in AF driving.

According to an embodiment, the first stopper 325 and the second stopper 375 may be integrally formed. For example, referring to FIGS. 15 and 16, the first stopper 325 for preventing damage caused by collision between components included in the camera module 300 in OIS driving of the carrier member 340 or 350, and the second stopper 326 for preventing damage caused by collision between components included in the camera module 300 in AF driving may be integrally provided. Referring to FIG. 16, instead of the second stopper 375 provided in the horizontal frame 371 illustrated in FIGS. 13 and 14, a second stopper 326b for preventing collision during AF driving may be formed on the cover plate 321. The second stopper 326b may protrude from the cover plate 321 toward a surface facing the frame 370. In this case, the second stopper 326b may be spaced apart from the frame 370 by a predetermined distance d1. According to an embodiment, as the second stopper 375 of the frame 370 is replaced with the second stopper 326b, the frame 370 may be omitted. As illustrated in FIGS. 15 and 16, when the integrated stopper 326 in which the first stopper 326a and the second stopper 326b are integrally formed is provided, the manufacturing cost of the camera module 300 may be reduced.

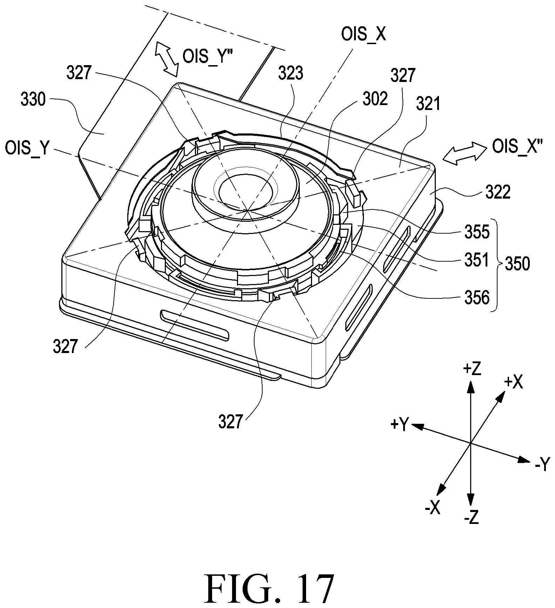

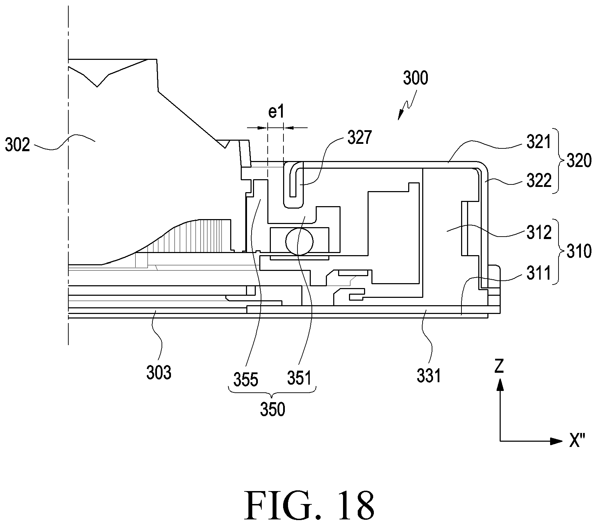

FIG. 17 is a perspective view illustrating a camera module according to an embodiment. FIG. 18 is a cross-sectional view illustrating a portion of a camera module according to an embodiment.

In the embodiments of FIGS. 7 and 8, the first stopper 325 may be formed to face the carrier stopper 355 in the second direction (X-axis direction) and/or the third direction (Y-axis direction). However, the position of the first stopper is not necessarily limited thereto. Referring to FIGS. 17 and 18, the first stopper 327 may be disposed to face the carrier stopper 355 in a direction different from the second direction (X-axis direction) and the third direction (Y-axis direction). According to an embodiment, the first stopper 327 may be disposed in a diagonal direction between the second direction (X-axis direction) and the third direction (Y-axis direction). For example, the first stopper 327 may be disposed so that the first stopper 327 faces in the X" axis and the Y" axis between the X axis and the Y axis, and correspondingly, the carrier stopper may also be disposed to face in the X" axis and the Y" axis.

The electronic device 101 may detect the shakes of the carrier member 340 or 350 in a direction substantially perpendicular to the optical axis direction to perform the shake correction (OIS) operation. To that end, the electronic device 101 may include a shake detection sensor (e.g., a gyro sensor). In the above-described embodiments of FIGS. 7 and 8, the shake detection sensor (e.g., gyro sensor) of the second carrier 350 may be disposed to face in the second direction (X-axis direction) and/or the third direction (Y-axis direction) to detect shakes. In the embodiments illustrated in FIGS. 17 and 18, according to an embodiment, the shake detection sensor (e.g., a gyro sensor) may be aligned with the OIS driving direction. For example, when the first stopper 327 is disposed in a diagonal direction between the second direction (X-axis direction) and the third direction (Y-axis direction), the shake sensor may also be disposed at a position having an angular difference of about 45 degrees from the second direction (X-axis direction) and the third direction (Y-axis direction) to match the sensing direction with the OIS driving direction. According to an embodiment, the shake detection sensor may be disposed in the second direction (X-axis direction) and the third direction (Y-axis direction) to detect shakes while the sensing direction does not match the OIS driving direction. In this case, Sineθ and Cosθ computation is performed by the misaligned angle θ between the shake detection sensor and the OIS driving direction, and the amount of OIS driving in the X" and Y" directions should be applied. For example, OIS_X" = OIS_X*cosθ + OIS_Y*sinθ and OIS_Y" = OIS_Y*cosθ + OIS_X*sinθ.

In the electronic device 101, the interval between the first stopper 327 and the carrier stopper may be variously set according to the sensing direction of the shake detection sensor, the OIS driving direction, and the position where the first stopper 327 is disposed. For example, referring to FIG. 18, the interval e1 between the first stopper 327 and the carrier stopper 355 may have an interval compensated by the misaligned angle θ compared to the interval a1 described above with reference to FIG. 5.

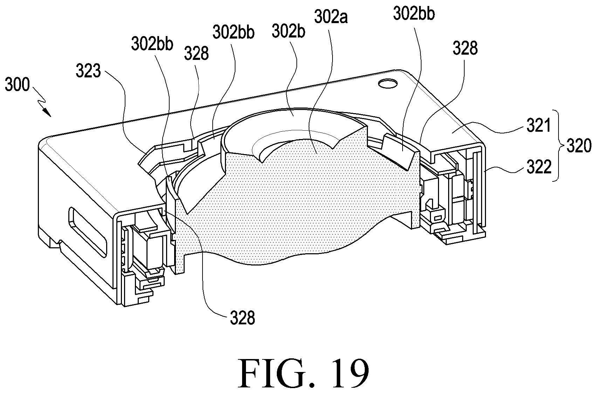

FIG. 19 is a cross-sectional perspective view illustrating a camera module according to an embodiment.

According to an embodiment, the camera module 300 may include a lens stopper 302bb formed in the lens barrel 302b instead of including the carrier stopper 355 in the carrier member (e.g., the second carrier 350). As the lens stopper 302bb is provided, a first stopper 328 corresponding thereto may be provided.

As described above, the auto focus function and the shake correction function of the lens assembly driving method may be difficult to equip in a downsized electronic device. For example, given the volume of the lens assembly, space for driving, and/or driving components for moving the lens assembly, the auto focus first and the shake correction first of the lens assembly driving method may be difficult to equip in a downsized electronic device. According to various embodiments of the disclosure, it is possible to effectively reduce and/or prevent damage that may occur during OIS driving and AF driving of the carrier member 340 or 350 while being applicable to downsized electronic devices.

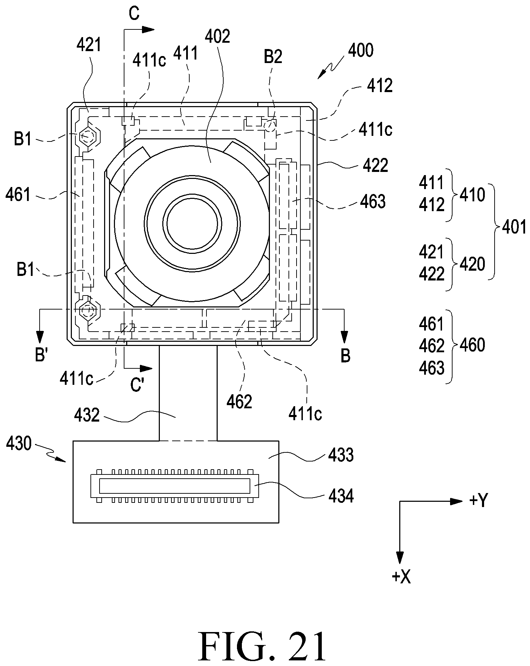

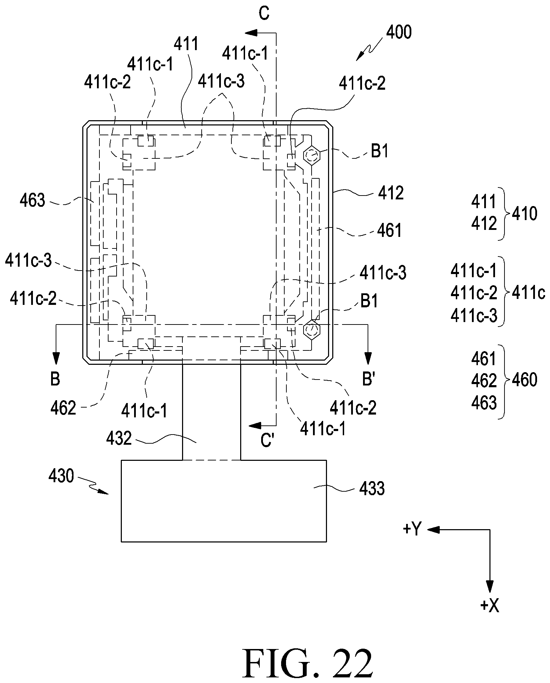

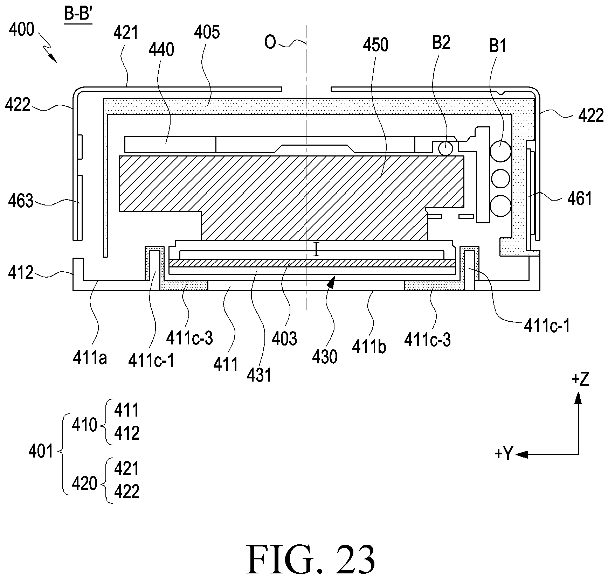

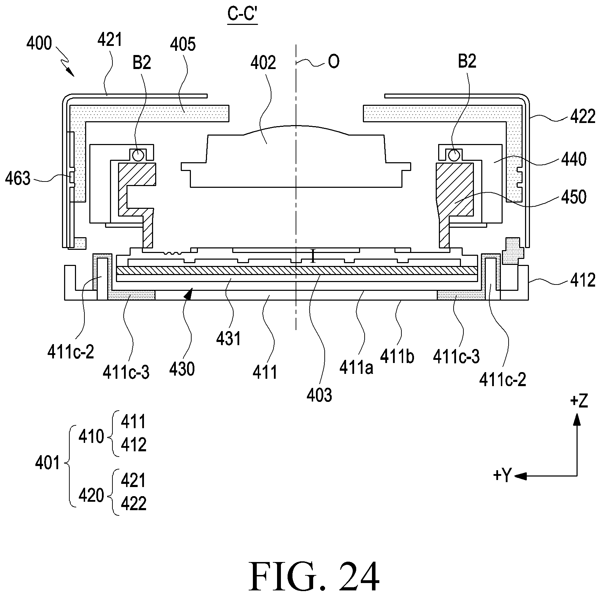

FIG. 20 is a perspective view illustrating a camera module according to an embodiment. FIG. 21 is a front view illustrating a camera module in which an inside thereof is shown according to an embodiment. FIG. 22 is a rear view illustrating a camera module in which an inside thereof is shown according to an embodiment. FIG. 23 is a cross-sectional view illustrating a camera module according to an embodiment. FIG. 24 is a cross-sectional view illustrating a camera module according to an embodiment.

Here, FIG. 23 may be a cross-sectional view of the camera module of FIG. 22 taken along line B-B'. FIG. 24 may show a cross section of the camera module of FIG. 22, take along direction C-C'.

FIGS. 20 to 24 may illustrate a vertical camera module 400 in which an AF operation and/or an OIS operation is performed in an image sensor shift type according to an embodiment. Referring to FIGS. 20 to 24, the camera module 400 may include a camera housing 401, a lens assembly 402, an image sensor 403, a first carrier 440, a second carrier 450, and/or a driving member 460. Further, the camera module 400 may include at least one printed circuit board (e.g., the first substrate 431 and the second substrate 433). In describing the components included in the camera module 400, no duplicate description of the components of the camera module 300 described above in connection with FIGS. 4 to 19 may be given below.

The camera housing 401 may include a base housing 410 and a cover housing 420. The base housing 410 may be a portion that refers to a base of the camera housing 401, and the cover housing 420 may be a portion that is coupled to the base housing 410 to form a space in which various components may be mounted inside the camera housing 401. The base housing 410 may include a base plate 411 and a base side wall 412. The cover housing 420 may include a cover plate 421 and a side plate 322.

The image sensor 403 may be disposed on one surface of the first substrate 431. For example, the image sensor 403 may be disposed on the surface of the first substrate 431 facing in the +Z-axis direction. In the embodiments of FIGS. 20 to 24, the image sensor 403 may be moved in the X-axis, Y-axis, and/or Z-axis directions by the driving member 460. The signal obtained from the image sensor 403 may be transferred to another component (e.g., an image signal processor) electrically connected to the first substrate 431 through the first substrate 431. The first substrate 431 may be electrically connected to the second substrate 433. According to an embodiment, while the position of the second substrate 433 is fixed, the first substrate 431 may move in the X-axis, Y-axis, and/or Z-axis directions together with the image sensor 403. The connection member 432 may be disposed between the first substrate 431 and the second substrate 433, so that the electrical connection between the first substrate 431 and the second substrate 433 may be stably maintained. In an embodiment, the connection member 432 (e.g., the connection member 332 of FIG. 4) is illustrated as simply extending in a straight line toward the second substrate 433, but is not necessarily limited thereto. The connecting member 432 may have, e.g., a shape such as "L", "U", or "S", and the length and shape of the connecting member 432 may vary according to an embodiment. According to an embodiment, the connection member 432 may be formed of a flexible printed circuit board (FPCB). A connector 434 may be provided on one surface of the second substrate 433. The connector 434 may have a kind of receptacle shape, but is not necessarily limited thereto, and may have a header shape to be fastened to a connector of another component. According to an embodiment, the image sensor 403 may be provided as an image sensor assembly 430 where components such as the first substrate 431 and the second substrate 433 are coupled. For example, the image sensor assembly 430 may be formed of a combination of the first substrate 431, the second substrate 433, the connection member 432, the image sensor 403, and/or a filter. However, this is merely an example, and other components not mentioned may be added to the image sensor assembly 430, or at least one (e.g., the second substrate 433) of the above-mentioned components may be omitted.

The camera module 400 may include a carrier member to guide to reciprocate the first substrate 431 where the image sensor 403 is disposed in the direction along the optical axis O-I, i.e., the optical axis direction (e.g., the first direction) and/or a direction (e.g., the second direction or the third direction) substantially perpendicular to the optical axis.

The camera module 400 may include a carrier member composed of at least two carriers. For example, the carrier member may include a first carrier 440 and a second carrier 450. The carrier member may further include at least one carrier (e.g., a third carrier) according to an embodiment. The camera module 400 may further include a bracket 405 for supporting the first carrier 440. According to an embodiment, the bracket 405 may be coupled to the camera housing 401 (e.g., the cover plate 421 of the cover housing 420) to be fixed in position. The first carrier 440 may be coupled to the bracket 405 via a guide ball (e.g., the first guide ball B1).

According to the embodiments illustrated in FIGS. 23 and 24, since the first carrier 440 is configured to be movable in the optical axis direction (e.g., the first direction (the Z-axis direction)), and this is related to an auto focus (AF) operation, the first carrier 440 may be referred to as an "AF carrier". The second carrier 450 may linearly reciprocate in a direction (e.g., the second direction (X-axis direction) or the third direction (Y-axis direction)) substantially perpendicular to the optical axis while being disposed on one surface of the first carrier 440. Since the movement in the direction substantially perpendicular to the optical axis is related to an optical image stabilization (OIS) operation, the second carrier 450 may be referred to as an 'OIS carrier'. One side of the second carrier 450 may be supported by a guide ball (e.g., the second guide ball B2), and the other side of the second carrier 450 may be coupled to the image sensor assembly 430.

The driving member 460 may include at least one coil and at least one magnet disposed to at least partially face the at least one coil. The at least one magnet may be disposed to face the at least one coil in a state of facing in the direction (e.g., the second direction (X-axis direction) or the third direction (Y-axis direction)) substantially perpendicular to the optical axis or may be disposed to face the at least one coil in a state of facing in the optical axis direction (e.g., the first direction (Z-axis direction)). A plurality of driving members 460 may be provided. According to an embodiment, the driving member 460 may include a first driver 461, a second driver 462, and a third driver 463. In this case, the first driver 461 may be an auto focus (AF) driver (AF driver) for automatically focusing the camera module 400, and the second driver 462 and the third driver 463 may be optical image stabilization (OIS) drivers (OIS drivers) for optical image stabilization (OIS) of the camera module 400.

Referring to the embodiments of FIGS. 20 to 24, the camera module 400 may include a first stopper 411c protruding from the camera housing 401 (e.g., the base housing 410) in the optical axis O-I direction (e.g., the +Z axis direction). The base plate 411 of the base housing 410 may include a first surface 411a facing the cover housing 420 and a second surface 411b facing away from the first surface 411a in the optical axis O-I direction. The first stopper 411c may protrude from the first surface 411a of the base plate 411 to a predetermined height. According to an embodiment, as the first stopper 411c, a plurality of first stoppers 411c may be provided. A plurality of first stoppers 411c may surround the image sensor assembly 430 (e.g., the first substrate 431). For example, when the first substrate 431 has a rectangular shape, the plurality of first stoppers 411c may be disposed to face one surface of the image sensor assembly 430 (e.g., the first substrate 431) to restrict the movement of the first substrate 431 in the width direction (e.g., the X-axis direction), and may be disposed to face the other surface of the image sensor assembly 430 (e.g., the first substrate 431) to restrict the movement of the first substrate 431 in the length direction (e.g., the Y-axis direction). According to an embodiment, the first stopper 411c may include a 1-1th stopper 411c-1 for restricting the movement of the image sensor assembly 430 (e.g., the first substrate 431) in the width direction (e.g., the X-axis direction) and a 1-2th stopper 411c-2 for restricting the movement of the image sensor assembly 430 (e.g., the first substrate 431) in the length direction (e.g., the Y-axis direction). According to an embodiment, the 1-1th stopper 411c-1 and the 1-2th stopper 411c-2 may be configured as an integrated stopper 411c through a connection portion 411c-3. According to an embodiment, the connection portion 411c-3 may prevent foreign substances from entering the camera module between 1-1th stopper 411c-1 and 1-2th stopper 411c-2. However, as described above with reference to the embodiment of FIG. 17, the position and number of stoppers are not necessarily limited to the embodiments of FIGS. 20 to 24, and may be variously applied according to embodiments.

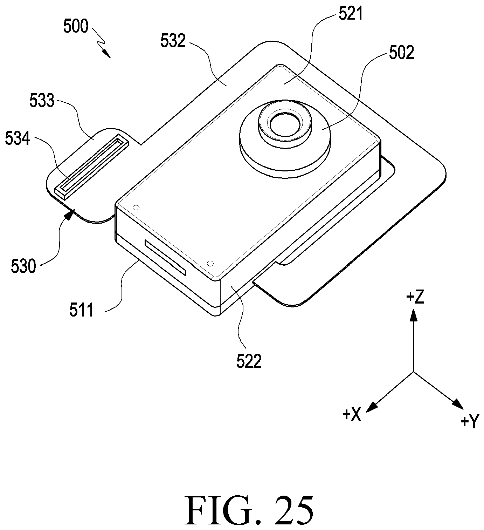

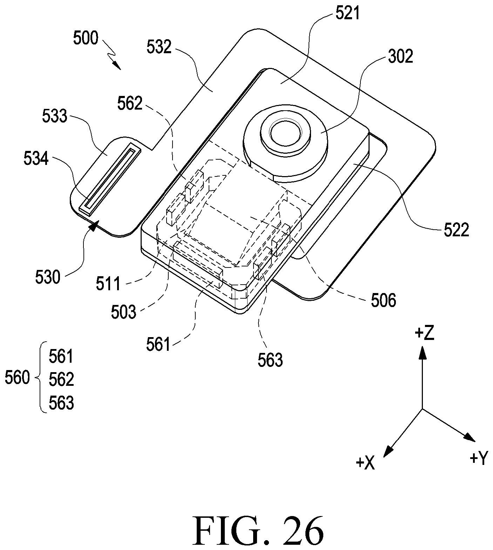

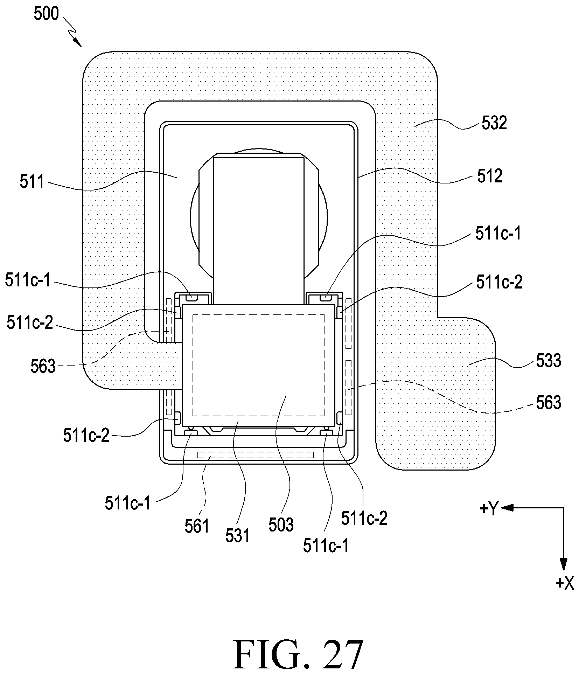

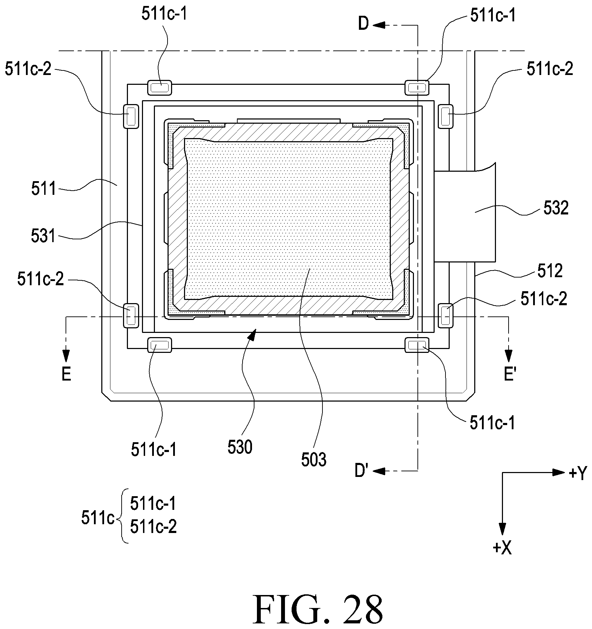

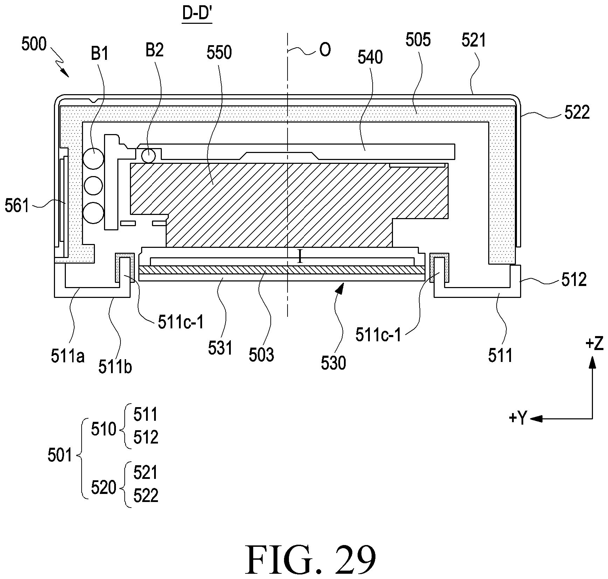

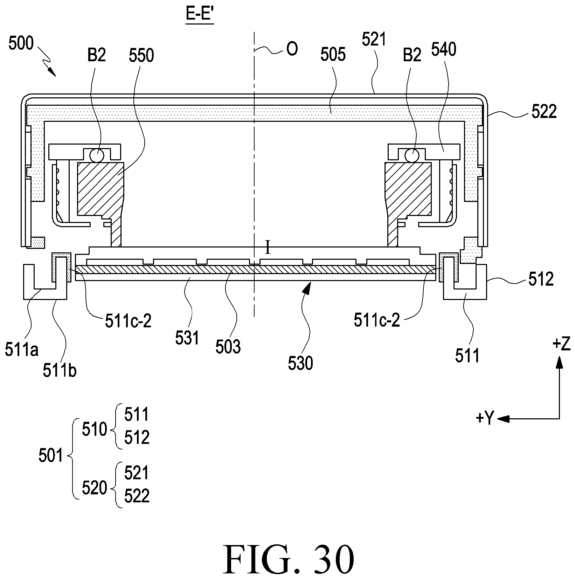

FIG. 25 is a perspective view illustrating a camera module according to an embodiment. FIG. 26 is a front view illustrating a camera module in which an inside thereof is shown according to an embodiment. FIG. 27 is a rear view illustrating a camera module in which an inside thereof is shown according to an embodiment. FIG. 28 is a rear view illustrating an image sensor assembly and a first stopper according to an embodiment. FIG. 29 is a cross-sectional view illustrating a camera module according to an embodiment. FIG. 30 is a cross-sectional view illustrating a camera module according to an embodiment.

Here, FIG. 29 may be a cross-sectional view of the camera module of FIG. 28 taken along direction D-D'. FIG. 30 may show a cross section of the camera module of FIG. 28, take along direction E-E'.

FIGS. 25 to 30 may illustrate a folded type camera module 500 in which an AF operation and/or an OIS operation is performed in an image sensor shift type according to an embodiment. Referring to FIGS. 25 to 30, the camera module 500 may include a camera housing 501, a lens assembly 502, an image sensor 503, a first carrier 540, a second carrier 550, and/or a driving member 560. The camera module 500 may further include a reflective and refractive member 506. Further, the camera module 500 may include at least one printed circuit board (e.g., the first substrate 531 and the second substrate 533). In describing the components included in the camera module 500, no duplicate description of the components of the camera modules 300 and 400 described above in connection with FIGS. 4 to 24 may be given below.

The camera housing 501 may include a base housing 510 and a cover housing 520. The base housing 510 may be a portion that refers to a base of the camera housing 501, and the cover housing 520 may be a portion that is coupled to the base housing 510 to form a space in which various components may be mounted inside the camera housing 501. The base housing 510 may include a base plate 511 and a base side wall 512. According to an embodiment, the base plate 511 may have an opening formed at a position corresponding to the image sensor 503 and may have a shape surrounding the opening. The cover housing 520 may include a cover plate 521 and a side plate 522.

The image sensor 503 may be disposed on one surface of the first substrate 531. For example, the image sensor 503 may be disposed on the surface of the first substrate 531 facing in the +Z-axis direction. In the embodiments of FIGS. 25 to 30, the image sensor 503 may be moved in the X-axis, Y-axis, and/or Z-axis directions by the driving member 560. The signal obtained from the image sensor 503 may be transferred to another component (e.g., an image signal processor) electrically connected to the first substrate 531 through the first substrate 531. The first substrate 531 may be electrically connected to the second substrate 533. According to an embodiment, while the position of the second substrate 533 is fixed, the first substrate 531 may move in the X-axis, Y-axis, and/or Z-axis directions together with the image sensor 503. The connection member 532 may be disposed between the first substrate 531 and the second substrate 533, so that the electrical connection between the first substrate 531 and the second substrate 533 may be stably maintained. The connection member 532 may be formed in a "U" shape as illustrated in FIGS. 25 to 27, but is not necessarily limited thereto. The connecting member 532 may have, e.g., a shape such as "L" or "S", and the length and shape of the connecting member 532 may vary according to an embodiment. According to an embodiment, the connection member 532 may be formed of a flexible printed circuit board (FPCB). According to an embodiment, a slit (not shown) may be formed in the connection member 532 to reduce and/or prevent damage to the connection member 532 when the image sensor 503 is moved. A connector 534 may be provided on one surface of the second substrate 533. The connector 434 may have a kind of receptacle shape, but is not necessarily limited thereto, and may have a header shape to be fastened to a connector of another component. According to an embodiment, the image sensor 503 may be provided as an image sensor assembly 530 where components such as the first substrate 531 and the second substrate 533 are coupled. For example, the image sensor assembly 530 may be formed of a combination of the first substrate 531, the second substrate 533, the connection member 532, the image sensor 503, and/or a filter. However, this is merely an example, and other components not mentioned may be added to the image sensor assembly 530, or at least one (e.g., the second substrate 533) of the above-mentioned components may be omitted.

The camera module 500 may include a reflective and refractive member 506 that may reflect and/or refract light at least twice. The reflective and refractive member 506 may include, e.g., a prism and/or a mirror. When viewed from the side, the reflective and refractive member may be shaped like a parallelogram, a rhomboid, a trapezoid, and a flat bowl as a whole. The reflective and refractive member 506 may have, e.g., a form in which a plurality of small reflective and refractive members are coupled to form one reflective and refractive member 506.

The camera module 500 may include a carrier member to guide to reciprocate the first substrate 531 where the image sensor 503 is disposed in the direction along the optical axis O-I, i.e., the optical axis direction (e.g., the first direction) and/or a direction (e.g., the second direction or the third direction) substantially perpendicular to the optical axis.

The camera module 500 may include a carrier member composed of at least two carriers. For example, the carrier member may include a first carrier 540 and a second carrier 550. The carrier member may further include at least one carrier (e.g., a third carrier) according to an embodiment. The camera module 500 may further include a bracket 505 for supporting the first carrier 540. The bracket 505 may be coupled to the camera housing 501 (e.g., the cover plate 522 of the cover housing 520) to be fixed in position. The first carrier 540 may be coupled to the bracket 505 via a guide ball (e.g., the first guide ball B1).

According to the embodiments illustrated in FIGS. 29 and 30, since the first carrier 540 is configured to be movable in the optical axis direction (e.g., the first direction (the Z-axis direction)), and this is related to an auto focus (AF) operation, the first carrier 540 may be referred to as an "AF carrier". The second carrier 550 may linearly reciprocate in a direction (e.g., the second direction (X-axis direction) or the third direction (Y-axis direction)) substantially perpendicular to the optical axis while being disposed on one surface of the first carrier 540. Since the movement in the direction substantially perpendicular to the optical axis is related to an optical image stabilization (OIS) operation, the second carrier 550 may be referred to as an 'OIS carrier'. One side of the second carrier 550 may be supported by a guide ball (e.g., the second guide ball B2), and the other side of the second carrier 450 may be coupled to the image sensor assembly 530.

The driving member 560 may include at least one coil and at least one magnet disposed to at least partially face the at least one coil. The at least one magnet may be disposed to face the at least one coil in a state of facing in the direction (e.g., the second direction (X-axis direction) or the third direction (Y-axis direction)) substantially perpendicular to the optical axis or may be disposed to face the at least one coil in a state of facing in the optical axis direction (e.g., the first direction (Z-axis direction)). A plurality of driving members 560 may be provided. According to an embodiment, the driving member 560 may include a first driver 561, a second driver 562, and a third driver 563. In this case, the first driver 561 may be an auto focus (AF) driver (AF driver) for automatically focusing the camera module 500, and the second driver 562 and the third driver 563 may be optical image stabilization (OIS) drivers (OIS drivers) for optical image stabilization (OIS) of the camera module 500.

Referring to the embodiments of FIGS. 25 to 30, the camera module 500 may include a first stopper 511c protruding from the camera housing 501 (e.g., the base housing 510) in the optical axis O-I direction (e.g., the +Z axis direction). The base plate 511 of the base housing 510 may include a first surface 511a facing the cover housing 520 and a second surface 511b facing away from the first surface 511a in the optical axis O-I direction. The first stopper 511c may protrude from the first surface 511a of the base plate 511 to a predetermined height. According to an embodiment, as the first stopper 511c, a plurality of first stoppers 511c may be provided. The plurality of first stoppers 511c may surround the image sensor assembly 530 (e.g., the first substrate 531). For example, when the first substrate 531 has a rectangular shape, the plurality of first stoppers 511c may be disposed to face one surface of the image sensor assembly 530 (e.g., the first substrate 531) to restrict the movement of the first substrate 531 in the width direction (e.g., the X-axis direction), and may be disposed to face the other surface of the image sensor assembly 530 (e.g., the first substrate 531) to restrict the movement of the first substrate 531 in the length direction (e.g., the Y-axis direction). According to an embodiment, the first stopper 511c may include a 1-1th stopper 511c-1 for restricting the movement of the image sensor assembly 530 (e.g., the first substrate 531) in the width direction (e.g., the X-axis direction) and a 1-2th stopper 511c-2 for restricting the movement of the image sensor assembly 530 (e.g., the first substrate 531) in the length direction (e.g., the Y-axis direction). Although not separately illustrated in the drawings, the 1-1th stopper 511c-1 and the 1-2th stopper 511c-2 may be configured as an integrated stopper 511c through a connection portion (e.g., the connection portion 411c-3 of FIG. 22). However, as described above with reference to the embodiment of FIG. 17, the position and number of stoppers are not necessarily limited to the embodiments of FIGS. 25 to 30, and may be variously applied according to embodiments.

The camera modules 400 and 500 disclosed in the embodiments of FIGS. 20 to 30 may absorb and/or disperse the impact applied to the camera modules 400 and 500 in a direction (e.g., the second direction (X-axis direction) or the third direction (Y-axis direction)) substantially perpendicular to the optical axis using the first stoppers 411c and 511c protruding from the base plates 411 and 511, and may reduce noise.

The electronic device according to various embodiments may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, there may be provided an electronic device comprises a camera module, the camera module comprising: a camera housing; a lens assembly including at least one lens aligned along an optical axis; a first substrate including a surface where an image sensor is disposed; a carrier member configured to move with respect to the camera housing, and either to guide movement of the first substrate or to guide movement of the lens assembly; at least one driving member configured to move the carrier member; and a first stopper protruding from the camera housing and configured to restrict a movement of at least one of the carrier member, the first substrate or the lens assembly in a direction perpendicular to the optical axis.

The driving member may comprise at least one magnet disposed to at least partially face at least one coil, the at least one magnet or the at least one coil being located on the carrier member and being configured to move the carrier member in response to a current being applied to the at least one coil.

The lens assembly may have an optical axis(O-I). At least one lens in the lens assembly may be aligned along the optical axis. A first direction may lie in a plane parallel to the optical axis of the lens assembly. The first direction may lie in a plane perpendicular to a plane occupied by the image sensor.

According to an embodiment of the disclosure, there may be provided an electronic device 101 including a camera module 180; 300; 400; 500. An electronic device 101 including a camera module 180; 300; 400; 500 may comprise a camera housing 301; 401; 501; a lens assembly 302; 402; 502 including at least one lens aligned along an optical axis O-I; a first substrate 331; 431; 531 including a surface where an image sensor 303; 403; 503 is disposed; a carrier member 340, 350; 440, 450; 540, 550 configured to guide the first substrate 331; 431; 531 where the image sensor 303; 403; 503 is disposed or to guide the lens assembly in a direction parallel to the optical axis or a direction perpendicular to the optical axis; at least one driving member 361, 362, 363 including at least one coil 361a, 362a, 363a and at least one magnet 361b, 362b, 363b disposed to at least partially face the at least one coil and configured to move the carrier member 340, 350 in the direction parallel to the optical axis and the direction perpendicular to the optical axis; and a first stopper 325; 411c; 511c protruding from the camera housing in a direction parallel to the optical axis and configured to restrict a movement, in the direction perpendicular to the optical axis, of the carrier member or the first substrate where the image sensor is disposed.

According to an embodiment, the camera housing may include a base housing 310 and a cover housing 320 coupled with the base housing to form a space S inside the camera housing. The cover housing may include a cover plate 321 having a cover opening 324 where the lens assembly is disposed and a side plate 322 extending from an edge of the cover plate in a height direction of the camera module. The first stopper may protrude toward the space from a portion 323 defining the cover opening in the cover plate.

According to an embodiment, the first stopper may include a bent portion 325a extending from the cover plate 321 and an elastomer portion 325b coupled with the bended portion.

According to an embodiment, the electronic device may further comprise a frame member 370 including a horizontal frame 371 disposed inside the camera housing and at least partially parallel to the camera housing and a vertical frame 372 protruding from the horizontal frame in the optical axis direction and a second stopper 375 disposed on the horizontal frame.

According to an embodiment, the first stopper and the second stopper may be integrally formed.

According to an embodiment, the base housing 310 may include a base opening 314 formed at a position overlapping the image sensor, a base plate 311 at least partially surrounding the base opening, and a base side wall 312 extending from the base plate in a height direction. The carrier member 340 or 350 may include a first carrier 340 including a first optical opening 344 disposed on the first substrate and formed at a position overlapping the image sensor, a first plate 341 at least partially surrounding the first optical opening, and a first side wall 342 protruding from the first plate in the optical axis direction. The carrier member may include a second carrier 350 including a second optical opening 354 disposed on the first carrier and formed at a position overlapping the image sensor, a second plate 351 at least partially surrounding the second optical opening, and a second side wall 352 protruding from the second plate in the optical axis direction.

According to an embodiment, the at least one driving member may include a first driver 361 including a first coil 361a configured to be disposed on a first base side wall 312a of the base side wall and a first magnet 361b disposed at a position corresponding to the first coil on the first side wall 342 of the first carrier 340; a second driver 362 including a second coil 362a configured to be disposed on a second base side wall 312b of the base side wall and a second magnet 362b disposed at a position corresponding to the second coil on the second side wall 352 of the second carrier 350; and a third driver 363 including a third coil 363a configured to be disposed on a third base side wall 312c of the base side wall and a third magnet 363b disposed at a position corresponding to the third coil on the second side wall 352 of the second carrier 350.

According to an embodiment, the first driver may be a driver for auto-focusing of the camera module.

According to an embodiment, the first driver may further include a plurality of first guide balls B1 and may be configured to reciprocate the first carrier 340 in the optical axis direction in a ball bearing manner.

According to an embodiment, the second driver and the third driver may be drivers for image stabilization of the camera module.

According to an embodiment, the second driver and the third driver may further include a plurality of second guide balls B2 and may be configured to reciprocate the second carrier in a direction crossing the optical axis in a ball bearing manner.

According to an embodiment, the carrier member 350 may have a carrier stopper corresponding to the first stopper or a lens barrel 302b included in the lens assembly may have a barrel stopper corresponding to the first stopper, forming a stopper structure.

According to an embodiment, the stopper structure may be formed in four portions symmetrical with respect to one point on the optical axis based on a movement of the carrier member in the direction perpendicular to the optical axis.

According to an embodiment, a first length where the carrier stopper and the first stopper overlap may be formed to be larger than a difference between a maximum height and a minimum height when the carrier member 340 or 350 moves in the optical axis direction when implementing a focusing function.

According to an embodiment, the carrier stopper may be formed to have a width larger than a maximum stroke when the carrier member moves in the direction perpendicular to the optical axis.

According to an embodiment of the disclosure, there may be provided an electronic device 101 including a camera module 300. An electronic device may comprise a camera housing 301; a lens assembly 302 including at least one lens 302a aligned along an optical axis O-I and a lens barrel 302b surrounding the at least one lens; a first substrate 331 including a surface where an image sensor 303 is disposed; a first carrier 340 configured to move the first substrate where the image sensor is disposed or configured to move the lens assembly in a first direction parallel to the optical axis; a second carrier 350 configured to move the first substrate where the image sensor is disposed or to move the lens assembly in a second direction perpendicular to the first direction or a third direction perpendicular to the optical axis and the second direction; at least one driving member 361, 362, 363 including at least one coil 361a, 362a, 363a and at least one magnet 361b, 362b, 363b disposed to at least partially face the at least one coil and configured to move the first carrier 340 in the first direction or to move the second carrier 350 in the second direction or the third direction; and a first stopper 325 protruding from the camera housing in a direction parallel to the optical axis and configured to restrict a movement of the second carrier. The first stopper 325 may be formed in four portions symmetrical with respect to one point on the optical axis based on a direction in which the second carrier 350 is driven.

According to an embodiment, the camera housing may include a base housing 310 and a cover housing 320 coupled with the base member to form a space S inside the camera housing. The cover member may include a cover plate 321 having a cover opening 324 where the lens assembly is disposed and a side plate 322 extending from an edge of the cover plate in a height direction of the camera module. The four portions where the first stopper is formed may be a portion 323 defining the cover opening in the cover plate.

According to an embodiment, the first stopper may include a bended portion 325a extending from the cover plate 321 and an elastomer portion 325b coupled with the bended portion.

According to an embodiment, there may be provided a camera module 300. A camera module may comprise a camera housing 301; a lens assembly 302 including at least one lens aligned along an optical axis O-I; a first substrate 331 including a surface where an image sensor 303 is disposed; an AF carrier 340 configured to guide the first substrate 331 where the image sensor 303 is disposed or to guide the lens assembly in a direction of the optical axis; and an OIS carrier 350 configured to guide the first substrate 331 where the image sensor 303 is disposed or to guide the lens assembly in a direction perpendicular to the optical axis. The AF carrier may contact the OIS carrier by a plurality of ball guides positioned between the AF carrier and the OIS carrier. The AF carrier may contact the camera housing by a plurality of ball guides positioned between the AF carrier and the camera housing. A first stopper may be included that protrudes from the camera housing toward a space between the AF carrier and the OIS carrier, the first stopper at least partially facing the OIS carrier or the lens assembly.

According to an embodiment, the carrier member 350 may have a carrier stopper corresponding to the first stopper or a lens barrel 302b included in the lens assembly includes a barrel stopper corresponding to the first stopper, forming a stopper structure. The stopper structure may be formed in four portions symmetrical with respect to one point on the optical axis based on a movement of the OIS carrier in the direction perpendicular to the optical axis.

While the disclosure has been described and shown in connection with various embodiments, it should be appreciated that various embodiments are intended as limiting but as illustrative. It will be apparent to one of ordinary skill in the art that various changes may be made in form and detail without departing from the overall scope of the disclosure, including the appended claims and their equivalents.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. An electronic device (101) including a camera module (180; 300; 400; 500), comprising:
a camera housing (301; 401; 501);
a lens assembly (302; 402; 502) including at least one lens aligned along an optical axis (O-I);
a first substrate (331; 431; 531) including a surface where an image sensor (303; 403; 503) is disposed;
a carrier member (340, 350; 440, 450; 540, 550) configured to guide the first substrate (331; 431; 531) where the image sensor (303; 403; 503) is disposed or to guide the lens assembly, in a direction parallel to the optical axis or a direction perpendicular to the optical axis;
at least one driving member (361, 362, 363) including at least one coil (361a, 362a, 363a) and at least one magnet (361b, 362b, 363b) disposed to at least partially face the at least one coil and configured to move the carrier member (340, 350) in the direction parallel to the optical axis and the direction perpendicular to the optical axis; and
a first stopper (325; 411c; 511c) protruding from the camera housing in a direction parallel to the optical axis and configured to restrict a movement, in the direction perpendicular to the optical axis, of the carrier member or the first substrate where the image sensor is disposed.

2. The electronic device of claim 1,
wherein the camera housing includes a base housing (310) and a cover housing (320) coupled with the base housing to form a space (S) inside the camera housing,
wherein the cover housing includes a cover plate (321) having a cover opening (324) where the lens assembly is disposed and a side plate (322) extending from an edge of the cover plate in a height direction of the camera module, and
wherein the first stopper protrudes toward the space from a portion (323) defining the cover opening in the cover plate.

3. The electronic device of claim 1 or 2, wherein the first stopper includes a bended portion (325a) extending from the cover plate (321) and an elastomer portion (325b) coupled with the bended portion.

4. The electronic device of any one of claims 1 to 3, further comprising:
a frame member (370) including a horizontal frame (371) disposed inside the camera housing and at least partially parallel to the camera housing and a vertical frame (372) protruding from the horizontal frame in the optical axis direction; and
a second stopper (375) disposed on the horizontal frame.

5. The electronic device of claim 4, wherein the first stopper and the second stopper are integrally formed.

6. The electronic device of claim 2, wherein the base housing (310) includes a base opening (314) formed at a position overlapping the image sensor, a base plate (311) at least partially surrounding the base opening, and a base side wall (312) extending from the base plate in a height direction, and
wherein the carrier member (340, 350) includes:
a first carrier (340) including a first optical opening (344) disposed on the first substrate and formed at a position overlapping the image sensor, a first plate (341) at least partially surrounding the first optical opening, and a first side wall (342) protruding from the first plate in the optical axis direction; and
a second carrier (350) including a second optical opening (354) disposed on the first carrier and formed at a position overlapping the image sensor, a second plate (351) at least partially surrounding the second optical opening, and a second side wall (352) protruding from the second plate in the optical axis direction.

7. The electronic device of claim 6, wherein the at least one driving member includes:
a first driver (361) including a first coil (361a) disposed on a first base side wall (312a) of the base side wall and a first magnet (361b) disposed at a position corresponding to the first coil on the first side wall (342) of the first carrier (340);
a second driver (362) including a second coil (362a) disposed on a second base side wall (312b) of the base side wall and a second magnet (362b) disposed at a position corresponding to the second coil on the second side wall (352) of the second carrier (350); and
a third driver (363) including a third coil (363a) disposed on a third base side wall (312c) of the base side wall and a third magnet (363b) disposed at a position corresponding to the third coil on the second side wall (352) of the second carrier (350).

8. The electronic device of claim 7, wherein the first driver is a driver for auto-focusing of the camera module.

9. The electronic device of claim 7, wherein the first driver further includes a plurality of first guide balls (B1) and is configured to reciprocate the first carrier (340) in the direction parallel to the optical axis in a ball bearing manner.

10. The electronic device of claim 7, wherein the second driver and the third driver are drivers for image stabilization of the camera module.

11. The electronic device of claim 7, wherein the second driver and the third driver further include a plurality of second guide balls (B2) and are configured to reciprocate the second carrier in a direction crossing the optical axis in a ball bearing manner.

12. The electronic device of any one of claims 1 to 11,
wherein the carrier member (350) includes a carrier stopper corresponding to the first stopper or a lens barrel (302b) included in the lens assembly includes a barrel stopper corresponding to the first stopper, forming a stopper structure.

13. The electronic device of claim 12, wherein the stopper structure is formed in four portions symmetrical with respect to one point on the optical axis based on a movement of the carrier member in the direction perpendicular to the optical axis.

14. The electronic device of claim 12, wherein a first length of an area where the carrier stopper and the first stopper overlap is formed to be larger than a difference between a maximum height and a minimum height when the carrier member (340, 350) moves in the direction parallel to the optical axis when implementing a focusing function.

15. The electronic device of claim 12, wherein the carrier stopper is formed to have a width larger than a maximum stroke when the carrier member moves in the direction perpendicular to the optical axis.
